(19)

**Europäisches Patentamt**
**European Patent Office**
**Office européen des brevets**

(11)  **EP 4 011 847 A1**

(12)  # EUROPÄISCHE PATENTANMELDUNG

(43) Veröffentlichungstag:
**15.06.2022  Patentblatt 2022/24**

(21) Anmeldenummer: **21213479.5**

(22) Anmeldetag: **09.12.2021**

(51) Internationale Patentklassifikation (IPC):
**C03C 17/22** (2006.01)      **C03C 10/00** (2006.01)
**C03C 17/34** (2006.01)

(52) Gemeinsame Patentklassifikation (CPC):
**C03C 17/22; C03C 10/00; C03C 17/225;
C03C 17/3435;** C03C 2217/28; C03C 2217/281;
C03C 2217/282; C03C 2217/78

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **14.12.2020  DE 102020133285**

(71) Anmelder: **SCHOTT AG
55122 Mainz (DE)**

(72) Erfinder:
• **HENN, Christian
  55546 Frei-Laubersheim (DE)**
• **KNOCHE, Silke
  55291 Saulheim (DE)**
• **SCHILLING, Dr. Franziska
  55288 Udenheim (DE)**

(74) Vertreter: **Blumbach · Zinngrebe Patentanwälte
PartG mbB
Alexandrastraße 5
65187 Wiesbaden (DE)**

(54)  **FARBNEUTRALE VERSCHLEISSSCHUTZSCHICHT, SUBSTRAT MIT DERARTIGER FARBNEUTRALER VERSCHLEISSSCHUTZSCHICHT UND VERFAHREN ZU DEREN HERSTELLUNG**

(57)    Die vorliegende Erfindung betrifft eine farbneutrale Verschleißschutzschicht für Substrate. Die Erfindung betrifft ferner auch ein Substrat mit einer derartiger farbneutralen Verschleißschutzschicht und ein Verfahren zu deren Herstellung.

Das Substrat umfasst dabei Glas oder Glaskeramik, wobei die Verschleißschutzschicht ganzflächig oder weitgehend ganzflächig auf zumindest einer Oberfläche des Substrates ausgebildet ist und eine Buntheit im CIELAB-Farbsystem von C* kleiner 14, bevorzugt kleiner 7 und besonders bevorzugt kleiner 4 aufweist bei Lichteinstrahlung, gemessen in Remission bei Normlichtart A oder Normlichtart C oder bei Schwarzkörperstrahlung mit einer Temperatur zwischen 2.500 K und 10.000 K, und wobei die Verschleißschutzschicht einen Lichttransmissionsgrad im sichtbaren Wellenlängenspektrum von weniger als 60 %, bevorzugt weniger als 50 % und besonders bevorzugt weniger als 40 % aufweist.

Fig. 1

EP 4 011 847 A1

**Beschreibung**

Die vorliegende Erfindung betrifft eine farbneutrale Verschleißschutzschicht für Substrate. Die Erfindung betrifft ferner auch ein Substrat mit einer derartiger farbneutralen Verschleißschutzschicht und ein Verfahren zu deren Herstellung.

Aus dem Stand der Technik sind verschiedene Beschichtungen zum Schutz der Oberfläche von Gegenständen, etwa von Werkzeugen, vor Beschädigungen wie zum Beispiel Kratzern bekannt. Ein derartiges Hartstoff-Schichtsystem auf der Basis von Titan ist etwa aus dem Dokument DE 11 2014 001 619 A1 bekannt. Dieses Schichtsystem bietet eine hohe Verschleißbeständigkeit. Weitere Hartstoffschichten für Werkzeuge zeigen beispielsweise die DE 10 2017 102 642 A1 oder die DE 10 2012 107 129 A1.

Während die optischen Eigenschaften bei vielen Hartstoff-Beschichtungen, etwa für Werkzeuge, nicht im Vordergrund stehen, so verhält es sich anders, wenn die Gegenstände Substrate wie etwa Glas oder Glaskeramik betreffen, welche ebenfalls zur Erhöhung der Kratzfestigkeit oder zur Vermeidung von Verschleiß mit einer Verschleißschutzschicht auf der Oberfläche versehen werden sollen.

Derartige Glaskeramik-Substrate können beispielsweise Kochflächen oder auch Kochgeschirr umfassen. Mit einer Verschleißschutzschicht auf der Kochflächen-Oberseite kann zum Beispiel gewährleistet werden, dass eine edle Anmutung von Kochflächen auch nach vielen Jahren des Gebrauchs erhalten bleibt. So beschreibt das Dokument DE 10 2011 081 234 A1 eine derartige Hartstoffbeschichtung auf Substraten aus Glaskeramik.

Nachteilig ist jedoch, dass der thermische Ausdehnungskoeffizient der Beschichtung und des Substrates nur geringfügig voneinander abweichen sollten. Da zudem Glaskeramiken einen sehr niedrigen thermischen Ausdehnungskoeffizienten aufweisen, grenzt dies die Anzahl der geeigneten Beschichtungen stark ein. So weisen beispielsweise Hartstoffschichten basierend auf Aluminiumnitrid oder Bornitrid häufig zu große thermische Ausdehnungskoeffizienten auf, so dass diese nicht oder nur schwierig zur Beschichtung von Glaskeramiksubstraten eingesetzt werden können. Bei Glaskeramiksubstraten sollte daher der Ausdehnungskoeffizient der Beschichtung nicht größer sein als +/- 5*10$^{-6}$ K$^{-1}$.

Eine Beschichtung zur Erhöhung der Kratzfestigkeit bzw. zum Schutz vor Verschleiß sollte demnach nicht nur eine hohe Härte aufweisen. Vielmehr sind auch andere Eigenschaften, insbesondere die Elastizität (E-Modul), die Oberflächenrauhigkeit, die Schichtspannungen durch unterschiedliche thermische Ausdehnungskoeffizienten von Substrat und Beschichtung sowie die Oberflächenbeschaffenheit des Substrates wichtige Faktoren für die Güte einer kratzfesten Beschichtung bzw. einer Verschleißschutzschicht des entsprechend beschichteten Substrates.

Darüber hinaus ist es wünschenswert, wenn entsprechend beschichtete Oberflächen von beispielsweise Glas- oder Glaskeramikgegenständen neben einer hohen Kratzfestigkeit auch eine hohe Resistenz gegenüber Verschleiß- und Politurbelastungen, wie sie sowohl während der Produktion als auch der späteren Verwendung auftreten, aufweisen.

Eine weitere Herausforderung für Verschleißschutzschichten für Glas oder Glaskeramik ist darin zu sehen, dass diese Schichten bzw. damit versehene Substrate, beispielsweise Kochflächen, in Abhängigkeit von der Beleuchtung oder der Beleuchtungssituation optisch unterschiedlich wahrgenommen werden können.

Eine gleiche Verschleißschutzschicht bzw. ein mit einer gleichen Verschleißschutzschicht versehenes Substrat kann demnach in Abhängigkeit von der Beleuchtungssituation oder dem Wellenlängenspektrum der entsprechenden Lichtquellen eine unterschiedliche farbliche Anmutung aufweisen.

Dies ist häufig unerwünscht, da im allgemeinen eine bestimmte farbliche Anmutung erhalten bleiben soll, auch wenn beispielsweise im Küchenbereich die Leuchtmittel getauscht werden und zum Beispiel neue, etwa energiesparende Leuchtmittel zum Einsatz kommen, welche aber einen anderen Farbwiedergabeindex aufweisen. In derartigen Fällen kann die mit der Verschleißschutzschicht versehene Oberfläche, beispielsweise einer Kochplatte aus Glaskeramik, plötzlich farblich anders wirken und das optische Erscheinungsbild verändern. Des Weiteren kann sich das optische Erscheinungsbild auch unterschiedlich bei natürlicher Beleuchtung, also bei Tageslicht, und bei künstlicher Beleuchtung darstellen.

Hinzu kann eine Winkelabhängigkeit kommen, welche zu unterschiedlichen Farbeindrücken in Abhängigkeit von dem Auftreffwinkel der Lichtquellen führen kann. Dadurch kann sich das optische Erscheinungsbild des gleichen Gegenstands mit der kratzresistenten Schicht ändern, je nachdem unter welchem Blickwinkel der Gegenstand betrachtet wird.

Wünschenswert ist demnach eine Verschleißschutzschicht für Substrate, etwa aus Glas oder Glaskeramik, welche neben dem Schutz vor mechanischen Einwirkungen eine homogene Farbanmutung bei verschiedener Beleuchtung bzw. bei unterschiedlichen Beleuchtungssituationen aufweist.

Eine Aufgabe der Erfindung ist demnach darin zu sehen, eine derartige Schicht zur Verfügung zu stellen, welche zum einen kratzresistent ist und die Oberfläche vor Verschleiß schützt, zum anderen aber auch farbneutral ist, also eine homogene Farbanmutung bei verschiedener Beleuchtung aufweist. Eine homogene Farbanmutung meint dabei insbesondere die optische Wahrnehmung der Schicht durch einen Benutzer, welche möglichst unabhängig von der Beleuchtung gleichbleibend und somit "farbneutral" sein soll.

Dabei soll die Verschleißschutzschicht neben einer hohen Kratzfestigkeit auch eine erhöhte Beständigkeit gegenüber Verschleiß- und Polierbelastungen sowie gegenüber Umweltbelastungen aufweisen.

Es ist ferner eine Aufgabe der Erfindung, ein zumindest teilweise mit dieser farbneutralen Verschleißschutzschicht beschichtetes Substrat zu Verfügung zu stellen. Das Substrat soll dabei insbesondere Gegenstände aus Glas oder Glaskeramik umfassen, beispielsweise Kochflächen.

Eine weitere Aufgabe der Erfindung besteht in der Bereitstellung eines entsprechenden Herstellungsverfahrens.

Die Aufgabe der Erfindung wird überraschend einfach durch den Gegenstand der unabhängigen Ansprüche gelöst. Vorteilhafte Ausgestaltungen und Weiterbildungen der Erfindung sind Gegenstand der Unteransprüche.

Die Erfindung betrifft in einem ersten Aspekt ein Substrat, vorzugsweise umfassend oder bestehend aus Glas oder Glaskeramik, mit einer temperaturstabilen, harten Verschleißschutzschicht, wobei die Verschleißschutzschicht vorzugsweise ganzflächig oder weitgehend ganzflächig auf zumindest einer Oberfläche des Substrates aufgebracht oder ausgebildet ist.

Die Verschleißschutzschicht weist eine Buntheit im CIELAB-Farbsystem von C* kleiner 14, bevorzugt kleiner 7 und besonders bevorzugt kleiner 4 auf bei Lichteinstrahlung, gemessen in Remission mit Licht der Normlichtart A oder der Normlichtart C oder bei Schwarzkörperstrahlung mit einer Farbtemperatur zwischen 2.500 K und 10.000 K. Die Normlichtarten D55, D65 bzw. D75 entsprechen Schwarzkörperstrahlern bei Farbtemperaturen von 5.500 K (D55), 6.500 K (D65) beziehungsweise 7.500 K (D75).

In einer bevorzugten Weiterbildung der Erfindung weist die Verschleißschutzschicht eine Buntheit im CIELAB-Farbsystem von C* kleiner 14, bevorzugt kleiner 7 und besonders bevorzugt kleiner 4 auf bei Lichteinstrahlung, gemessen in Remission mit Licht der Normlichtarten A und C oder sogar mit Licht der Normlichtarten A und C und D55 oder sogar mit Licht der Normlichtarten A und C und D55 und D65 oder sogar mit Licht der Normlichtarten A und C und D55 und D65 und D75. Dies bedeutet, dass die Verschleißschutzschicht eine entsprechend niedrige Buntheit für jede einzelne dieser Normlichtarten aufweist.

Die Buntheit C* im CIELAB-Farbsystem ist definiert durch

$$C^* = \sqrt{a^{*2} + b^{*2}}$$

wobei a* und b* die Farbkoordinaten in diesem System sind. Die Farbkoordinaten L*, a* und b* aus dem CIELAB-System lassen sich in bekannter Weise in Farbkoordinaten x, y und Helligkeit Y des CIE-Farbsystems umrechnen. Die Normlichtart A entspricht dabei einem Planck' schen Strahler im Vakuum bei 2.856 K mit x = 0,4476 und y = 0,4074, die Normlichtart C entspricht dem mittlere Tageslicht bei etwa 6.800 K mit x = 0,3101 und y = 0,3162.

Zusätzlich weist die Verschleißschutzschicht von Vorteil eine geringe Transmission im sichtbaren Wellenlängenspektrum auf. Vorzugsweise beträgt der Lichttransmissionsgrad der Verschleißschutzschicht weniger als 60 %, bevorzugt weniger als 50 % und besonders bevorzugt weniger als 40 %. In weiteren, ebenfalls besonders bevorzugten Ausführungsformen kann die Verschleißschutzschicht einen Lichttransmissionsgrad von gleich oder weniger als 35 %, gleich oder weniger als 5 %, gleich oder weniger als 2,5 % oder gleich oder weniger als 1 % aufweisen.

Ein erfindungsgemäß beschichtetes Substrat kann einen Lichttransmissionsgrad für die Gesamttransmission von weniger als 50 % und besonders bevorzugt weniger als 40 %, weniger als 35 %, weniger als 5 %, weniger als 2,5 % oder weniger als 1 % aufweisen.

Der Lichttransmissionsgrad der Schicht kann wie folgt bestimmt werden: Zuerst wird der Lichttransmissionsgrad des Substrates $\tau_S$ ohne Beschichtung gemäß DIN EN 410 bestimmt. Dann wird der Lichttransmissionsgrad des beschichteten Substrats $\tau_B$ gemäß DIN EN 410 bestimmt, wobei die Beschichtung auf der der Lichtquelle zugewandten Seite des Substrats angeordnet ist. Der Lichttransmissionsgrad der Beschichtung entspricht dann dem Quotient $\tau_B/\tau_S$. Zum Messen der Transmission kann die Verschleißschutzschicht auf ein Substrat mit einer Dicke von 4 mm aufgetragen werden, welches über einen hohen Transmissionsgrad von wenigstens 90 % oder darüber verfügt.

Ein Lichttransmissionsgrad von etwa 0,001 %, mehr als 0,01 % oder sogar mehr als 0,1 %, mehr als 0,5 % oder auch mehr als 1 %, ist für die geforderte Aufgabe möglich und hängt im Einzelfall von dem jeweiligen Transmissionsgrad des Substrates ab. Im Allgemeinen wird ein höherer Lichttransmissionsgrad bei dunkel eingefärbten Substraten als weniger störend empfunden als bei einem Substrat mit einem hohen Lichttransmissionsgrad von beispielsweise 90 %. Die Verschleißschutzschicht kann demnach eine hohe Opazität aufweisen und absorbierend blickdicht oder auch semitransparent ausgebildet sein.

Der vorstehend genannte Lichttransmissionsgrad bezieht sich demnach allein auf die Verschleißschutzschicht als wesentliches Element, um die gewünschte Farbneutralität zu erreichen, d.h. das Substrat kann selbstverständlich über weitere Schichten verfügen, welche auch davon abweichende Lichttransmissionsgrade aufweisen können.

Auf diese Weise kann eine Verschleißschutzschicht ausgebildet werden, welche eine homogene Farbanmutung bei verschiedener Beleuchtung bzw. bei unterschiedlichen Beleuchtungssituationen zeigt. Eine homogene Farbanmutung der Verschleißschutzschicht meint im Sinne der Erfindung, dass sich der Farbort des von der Verschleißschutzschicht abgestrahlten Lichtes, insbesondere bei verschiedener Beleuchtung, nicht oder kaum verändert, so dass die Verschleißschutzschicht eine hohe Farbneutralität aufweist.

Für die Erfindung können Substrate umfassend transparente oder transluzente, farblose oder volumengefärbte keramisierbare Gläser oder Glaskeramiken verwendet werden.

Unter einem Glas wird hierbei ein Material verstanden, welches durch einen Schmelzprozess hergestellt wird und eine röntgenamorphe Struktur aufweist.

Unter dem Begriff Glaskeramik sind Werkstoffe zu verstehen, die durch eine gesteuerte Kristallisation aus einer Glasschmelze hergestellt werden können, wobei zunächst ein keramisierbares Grünglas hergestellt wird, welches durch eine anschließende Keramisierung zu einer Glaskeramik umgewandelt wird.

Unter volumengefärbt werden Färbungen im sichtbaren Spektralbereich von 380 bis 780 nm verstanden. Volumenfärbungen können hierbei durch färbende Metallionen erreicht werden, wobei die farbgebenden Ionen im Grünglas oder in der Glaskeramik gelöst sind. Sofern das Element ein keramisierbares Grünglas umfasst, kann dieses nach dem Beaufschlagen mit elektromagnetischer Strahlung zur Veränderung der optischen Eigenschaften durch einen Keramisierungsprozess in eine Glaskeramik überführt werden.

Als Substrate können allgemein Gläser, bevorzugt Borosilikatgläser, Aluminosilikatgläser, Kalk-Natrongläser, synthetische Quarzgläser (sogenannte "fused silica"-Gläser), Lithiumaluminosilikatgläser oder optische Gläser verwendet werden. Auch Kristalle für optische Anwendungen wie z.B. Saphir oder Kaliumfluoridkristalle können als Substrat verwendet werden. Desweiteren können Glaskeramiken, bevorzugt Lithium-Aluminosilikat-Glaskeramiken, eingesetzt werden.

Bevorzugt werden Gläser und Glaskeramiken mit einer niedrigen thermischen Ausdehnung verwendet, da dies die Temperaturwechselbeständigkeit erhöht. Für Gläser liegt der thermische Ausdehnungskoeffizient $\alpha_{20\text{-}300}$ deshalb vorzugsweise im Bereich von $2*10^{-6}$ K$^{-1}$ bis $7*10^{-6}$ K$^{-1}$, bevorzugt im Bereich von $2,5*10^{-6}$ K$^{-1}$ bis $5*10^{-6}$ K$^{-1}$, besonders bevorzugt im Bereich von $3*10^{-6}$ K$^{-1}$ bis $4,5*10^{-6}$ K$^{-1}$. Substrate mit solchen Gläsern sind insbesondere für Kochgeräte mit Induktionsheizelementen geeignet.

In einer weiteren bevorzugten Ausführungsform handelt es sich bei dem Substrat um eine Glaskeramik, insbesondere um eine Glaskeramik mit einem thermischen Ausdehnungskoeffizienten $\alpha_{20\text{-}700}$ im Bereich $-1*10^{-6}$ K$^{-1}$ bis $2,5*10^{-6}$ K$^{-1}$, vorzugsweise im Bereich $-0,5*10^{-6}$ K$^{-1}$ bis $2,2*10^{-6}$ K$^{-1}$, besonders bevorzugt im Bereich $-0*10^{-6}$ K$^{-1}$ bis $2,0*10^{-6}$ K$^{-1}$. Für Kochgeräte mit Induktionsheizelementen werden Substrate mit einer Glaskeramik mit einem thermischen Ausdehnungskoeffizienten $\alpha_{20\text{-}700}$ im Bereich $1,5*10^{-6}$ K$^{-1}$ bis $2,5*10^{-6}$ K$^{-1}$, vorzugsweise im Bereich $1,7*10^{-6}$ K$^{-1}$ bis $2,2*10^{-6}$ K$^{-1}$, oder sogar im Bereich $1,8*10^{-6}$ K$^{-1}$ bis $2,1*10^{-6}$ K$^{-1}$ besonders bevorzugt. Dies ist beispielsweise bei auf dem LAS-System (Lithium-Aluminosilikat-Glaskeramik) basierenden Glaskeramiken der Fall. Selbstverständlich können auch andere Glaskeramiken, etwa auf dem MAS-System (Magnesium-Aluminosilikat-Glaskeramik) basierend, verwendet werden.

Der thermische Ausdehnungskoeffizient kann gemäß ISO 7991 bestimmt werden.

Ein geringer thermischer Ausdehnungskoeffizient CTE ermöglicht es, dass eine gute Temperaturbeständigkeit des beschichteten Substrates erreicht werden kann. Je höher der Betrag des Ausdehnungskoeffizienten des Glases oder der Glaskeramik ist, desto höher ist das Risiko von spannungsinduzierten Brüchen der Verschleißschutzschicht.

Dem kann entgegengewirkt werden, in dem das Glas oder die Glaskeramik thermisch oder chemisch vorgespannt wird. Durch eine solche Vorspannung entsteht an der Oberfläche des Glases eine Druckspannung, die der thermischen Spannung entgegenwirkt.

Entsprechende Glaskeramiken können beispielsweise als Kochflächen verwendet werden. Da die erfindungsgemäße Verschleißschutzschicht zudem gegenüber Temperaturen von zumindest 300 °C, bevorzugt von zumindest 400 °C und darüber dauerhaft stabil ist, kann die Beschichtung auch problemlos auf den Heißzonen des Kochfeldes aufgebracht werden.

Die erfindungsgemäße Verschleißschutzschicht kann eine große Härte und ein definiertes E-Modul aufweisen. Die Härte, gemessen nach DIN EN ISO 14577 (Martens-Härte) bei einer Prüfkraft von 10 mN, gemessen beispielsweise mit einem Berkovich-Eindringkörper, beträgt dabei vorzugsweise wenigstens 5 GPa, bevorzugt wenigstens 7 GPa, besonders bevorzugt 9 GPa oder sogar 11 GPa oder darüber hinaus. Als harte Verschleißschutzschicht im Sinne der Erfindung wird insbesondere eine Verschleißschutzschicht angenommen, welche die vorstehend genannte Härte aufweist, also wenigstens eine Härte von 5 GPa, bevorzugt wenigstens 7 GPa, besonders bevorzugt 9 GPa oder sogar 11 GPa oder darüber hinaus. Die Martens-Härte einer unbehandelten Glaskeramik-Oberfläche liegt im Vergleich hierzu bei etwa 3 bis 4 GPa und damit deutlich niedriger als bei der erfindungsgemäßen Verschleißschutzschicht.

Das E-Modul ist in der erfindungsgemäßen Verschleißschutzschicht parallel zur Substratoberfläche am größten. In einer Ausführungsform der Erfindung weist die Verschleißschutzschicht ein E-Modul im Bereich von 10 bis 700 GPa, bevorzugt 200 bis 600 GPa, besonders bevorzugt 300 bis 500 GPa auf. Das E-Modul einer unbehandelten Glas- oder Glaskeramik-Oberfläche liegt im Vergleich hierzu bei etwa 40 bis 90 GPa.

Die Verschleißschutzschicht eines Ausführungsbeispiels weist etwa eine Härte von 9,5 GPa und ein E-Modul von größer als 100 GPa, insbesondere größer als 200 GPa auf.

Dies ist insofern günstig, da die Kratzfestigkeit einer Beschichtung neben der Härte auch davon abhängt, wie gut die Beschichtung auf dem Substrat haftet. Zeigen Beschichtung und Substrat zudem unterschiedliche thermische Ausdehnungskoeffizienten, so kann dies zum Aufbau von Spannungen in der Beschichtung und zu Rissen oder sogar zu einem Abplatzen der Beschichtung führen. Bei Beschichtungen mit einem E-Modul wie oben dargestellt können dabei die auftretenden Spannungen besser abgefangen werden, so dass die Beschichtung besser auf dem Substrat haftet.

Die vergleichbaren Werte für das E-Modul eines Substrates aus Glas oder Glaskeramik, welches keine erfindungsgemäße Verschleißschutzschicht umfasst, liegen bei etwa 40 bis 90 GPa, wobei Glaskeramik beispielsweise eine Martenshärte von etwa 3 bis 4 GPa aufweist. Hierin zeigen sich die hervorragenden mechanischen Eigenschaften der Verschleißschutzschicht.

Die Resistenz der Verschleißschutzschicht gegenüber Abrieb ist weiterhin auch vom Verhältnis aus Härte und E-Modul der jeweiligen Schicht abhängig. Bevorzugt weist die Verschleißschutzschicht daher ein Verhältnis von Härte zu E-Modul von zumindest 0,007, bevorzugt zumindest 0,03, und besonders bevorzugt > 0,1 auf.

Die Oberfläche der Verschleißschutzschicht ist vorzugsweise chemisch inert gegenüber Luft, Wasser, Reinigungsmitteln wie Essig- und Zitronensäure sowie anderen Substanzen, wie sie bei der Nahrungsmittelzubereitung verwendet werden, insbesondere Salzwasser. Im Sinne der Erfindung wird hierunter verstanden, dass die Verschleißschutzschicht in Kontakt mit potentiellen Reaktionspartnern, also beispielsweise mit Luft, Reinigungsmitteln oder anderen Substanzen wie etwa Salzwasser, nicht oder nur in verschwindend geringem Maße reagiert, ähnlich beispielsweise einer Oberfläche aus Glas.

Damit bleibt in besonders günstiger Weise auch die Farbneutralität der Verschleißschutzschicht, auch bei Angriffen mit derartigen Substanzen, erhalten. Nachgewiesen werden kann dieses beispielsweise in einem Versuch, wobei der Farbabstand einer Fläche der Verschleißschutzschicht, welche über einen bestimmten Zeitraum, beispielsweise über 24 Stunden, einer Belastung mit einem potentiellen Reaktionspartner ausgesetzt wird, mit einer Vergleichsfläche der Verschleißschutzschicht, welche nicht einem potentiellen Reaktionspartner ausgesetzt wird, verglichen wird. Der Farbabstand der ersten Fläche der Verschleißschutzschicht zu der Vergleichsfläche der Verschleißschutzschicht kann als Farbabstand Delta E ermittelt werden gemäß EN ISO 11664-4.

Die Einwirkung des potentiellen Reaktionspartners, also z.B. Essig- oder Zitronensäure, kann bei Raumtemperatur erfolgen, wobei ein Tropfen Flüssigkeit auf die Verschleißschutzschicht aufpipettiert werden kann und z.B. unter einer Uhrglasscheibe für den vorgesehenen Zeitraum, beispielsweise über 24 Stunden, abgedeckt wird.

Der Farbabstand Delta E ($\Delta$E) zwischen den beiden oben genannten Flächen zugeordneten entsprechenden Farborten $(L^*, a^*, b^*)_p$ und $(L^*, a^*, b^*)_v$ kann dann gemäß EN ISO 11664-4 als euklidischer Abstand nach folgender Gleichung ermittelt werden:

$$\Delta E_{p,v} = \sqrt{\left(L_p^* - L_v^*\right)^2 + \left(a_p^* - a_v^*\right)^2 + \left(b_p^* - b_v^*\right)^2}$$

Erfindungsgemäß soll die Verschleißschutzschicht als chemisch inert gelten, wenn der Farbabstand zwischen einer Fläche der Verschleißschutzschicht, welche einer Belastung mit einem potentiellen Reaktionspartner ausgesetzt wurde, und einer Vergleichsfläche $\Delta E_{p,v} < 4$ beträgt, bevorzugt $\Delta E_{p,v} < 2$ und besonders bevorzugt $\Delta E_{p,v}$ E < 1. Diese Eigenschaft der erfindungsgemäßen Verschleißschutzschicht liefert damit einen wesentlichen Beitrag für die gewünschte Farbneutralität der Verschleißschutzschicht.

Gemäß einer bevorzugten Ausführungsform ist die Oberfläche der Verschleißschutzschicht und besonders bevorzugt die Verschleißschutzschicht vollständig frei von gesundheitsgefährdenden Stoffen. Dies betrifft insbesondere Materialien umfassend Arsen, Antimon, Blei, Quecksilber, Cadmium, sechswertiges Chrom oder Wismuth, aber auch Weichmacher (Phthalate) oder flüchtige organische Komponenten (VOCs). In einer besonders bevorzugten Ausführungsform ist die Verschleißschutzschicht demnach bis auf unvermeidbare Spuren frei von Arsen, Antimon, Blei, Quecksilber, Cadmium, sechswertiges Chrom oder Wismuth, sowie Weichmachern (Phthalate) und flüchtigen organischen Komponenten (VOCs).

Dies ist von großem Vorteil, wenn die Verschleißschutzschicht beispielsweise auf Kochflächen oder Kochgeschirr aus Glas oder Glaskeramik aufgebracht werden soll, und wobei die Verschleißschutzschicht in einen direkten Kontakt mit den zuzubereitenden Nahrungsmitteln kommen kann. Auf diese Weise können gesundheitliche Beeinträchtigungen und Gefahren durch unerwünschte Reaktionen oder Diffusionsprozesse im Kontaktbereich zwischen Verschleißschutzschicht und Nahrungsmittel verhindert werden.

Aufgrund der Schichteigenschaften der Verschleißschutzschicht, insbesondere der großen Härte sowie des E-Moduls, ist bereits eine Schichtdicke von nur 500 nm, bevorzugt wenigstens 800 nm, besonders bevorzugt wenigstens 1.000 nm ausreichend, um den erfindungsgemäßen mechanischen Schutz zu erzielen und damit das Substrat vor mechanischen Belastungen, Verschleiß und Kratzern zu schützen. Technisch sind auch dünnere Verschleißschutzschichten, etwa bis hin zu 100 nm oder sogar nur 50 nm realisierbar. Allerdings kann in diesem Fällen die mechanische Schutzfunktion beeinträchtigt werden. Dickere Schichten bis 5.000 nm, bevorzugt weniger als 3.500 nm, und besonders bevorzugt weniger als 2.000 nm, sind ebenfalls möglich, welche einen besseren Schutz vor mechanischen Einwirkungen bieten und damit eine längere Haltbarkeit und, etwa im Fall von Kochflächen, eine edle Anmutung der Kochfläche auch nach vielen Jahren des Gebrauchs. Allerdings sind hier die Verfahrenszeiten zum Erzeugen der Verschleißschutzschicht länger und der Materialeinsatz ist höher.

Die erfindungsgemäße Verschleißschutzschicht ist zudem gegenüber Temperaturen von zumindest 350 °C, bevorzugt von zumindest 400 °C und besonders bevorzugt von zumindest 500 °C dauerhaft farbstabil und ermöglicht es damit, die gewünschte Farbneutralität auch bei höheren Temperaturbelastungen zu gewährleisten. Hierunter ist im Sinne der Erfindung zu verstehen, dass die Verschleißschutzschicht bei einer Einwirkdauer von 30 Minuten über eine Anzahl von wenigstens 100 Zyklen, vorzugsweise von wenigstens 1.000 Zyklen, keine nennenswerte Änderungen in ihrem Farbort aufweist.

Ein Zyklus kann dabei die Erhitzung des Substrates mit der Verschleißschutzschicht von Raumtemperatur auf die besagte Temperatur, also 350 °C, bevorzugt zumindest 400 °C und besonders bevorzugt zumindest 500 °C, mit einem Temperaturanstieg von vorzugsweise zwischen 1 °C bis 50 °C pro Minute bis zu der vorgesehenen Temperatur umfassen, gefolgt von einer Haltezeit von 30 Minuten, und einem Abkühlen auf Raumtemperatur.

Nach der vorgesehenen Anzahl an Zyklen wird die Verschleißschutzschicht mit einer Verschleißschutzschicht verglichen, welche nicht diesen Temperaturzyklen unterworden wurde. Als farbstabil im Sinne der Erfindung gilt dann eine Verschleißschutzschicht, bei welcher der Farbabstand der Farborte der beiden Flächen $\Delta E < 4$ beträgt, bevorzugt $\Delta E < 2$ und besonders bevorzugt $\Delta E < 1$.

Die Erfinder haben herausgefunden, dass eine gute Farbneutralität der Verschleißschutzschicht besonders dann gut zum Tragen kommt, wenn die Verschleißschutzschicht selbst mehrschichtig oder mehrlagig ausgebildet ist. Dies bedeutet, dass die Verschleißschutzschicht mehrere Teilschichten oder Lagen aufweisen kann, umfassend wenigstens zwei, bevorzugt wenigstens drei, besonders bevorzugt mehr als drei Teilschichten. Diese Teilschichten oder Lagen sind vorzugsweise überlappend oder deckend aufeinander aufbauend aufgetragen und können gemeinsam die Verschleißschutzschicht ausbilden.

Ein wesentlicher Aspekt der Erfindung beruht darauf, die Reflexionsneigung der Verschleißschutzschicht zu reduzieren und/oder Lichtstrahlen bestimmter Wellenlängen zu absorbieren, und auf diese Weise die farbneutrale Wirkung noch weiter zu verbessern.

Bei mehrlagigen Schichten ergibt sich der Vorteil, dass die Farbneutralität durch die Wahl des Absorptionsspektrums jeder einzelnen Teilschicht über die Auswahl des Materials und zusätzlich durch Interferenzeffekte (Brechungsindex/Schichtdicke) sehr genau eingestellt werden kann, da sowohl das Absorptionsspektrum der Teilschichten als auch der Interferenzeffekt gezielt einzeln ausgewählt werden können.

Die Farbneutralität der erfindungsgemäßen Verschleißschutzschicht kann insbesondere durch die Anzahl, die Dicke und den Brechungsindex der einzelnen Teilschichten, welche vorzugsweise jeweils den vorstehend genannten Kriterien betreffend die Buntheit und die Transparenz entsprechen, unterstützt werden. Vorzugsweise werden diese Parameter so ausgewählt und/oder miteinander kombiniert, dass auftreffende elektromagnetische Strahlung im sichtbaren Wellenlängenspektrum möglichst wenig reflektiert wird und/oder absorbiert wird.

Eine besonders geeignete Ausführungsform der Erfindung sieht demnach eine mehrlagig ausgebildete Verschleißschutzschicht vor, welche wenigstens zwei, bevorzugt wenigstens drei, besonders bevorzugt mehr als drei Teilschichten umfasst.

Dabei können sämtliche oder einzelne Teilschichten der Verschleißschutzschicht gleiches oder unterschiedliches Material umfassen und somit beispielsweise aus gleichem oder unterschiedlichem Material bestehen. Wenn mehrere Teilschichten aus dem gleichen Material bestehen, können auch besonders vorteilhaft bekannte Sputterverfahren zum Erzeugen der Verschleißschutzschicht zum Einsatz kommen, bei welchen während des Sputterns mehrere identische Sputterquellen verwendet werden. Auf diese Weise kann besonders einfach in aufeinanderfolgenden Schritten das Substrat mit den Teilschichten beschichtet werden.

Erfindungsgemäß ist vorgesehen, dass auch die einzelnen Teilschichten bei einem mehrlagigen Aufbau der Verschleißschutzschicht semi-transparent ausgebildet sind. In anderen Worten, sämtliche zu einer Verschleißschutzschicht gehörenden Teilschichten weisen besonders günstig einen Lichttransmissionsgrad von weniger als 100 % auf, bevorzugt weniger als 95 % und besonders bevorzugt weniger als 90 %.

In einer besonders günstigen Ausführungsform beträgt der Lichttransmissionsgrad von zumindest einer der Teilschichten weniger als 60 %, bevorzugt weniger als 50 % und besonders bevorzugt weniger als 40 %. In weiteren, ebenfalls besonders bevorzugten Ausführungsformen beträgt der Lichttransmissionsgrad zumindest einer der Teilschichten gleich oder weniger als 35 %, gleich oder weniger als 5 %, gleich oder weniger als 2,5 % oder gleich oder weniger als 1 %.

In diesem Zusammenhang kann es günstig sein, wenn die einzelnen Teilschichten einen Brechungsindex-Gradienten aufweisen. Hierunter ist zu verstehen, dass der Brechungsindex zweier benachbarter Teilschichten voneinander abweicht. Dies kann bei einem mehrlagigen Aufbau in unterschiedlicher Weise erfolgen.

Überraschend hat sich herausgestellt, dass bei einem mehrlagigen Schichtaufbau der Verschleißschutzschicht dann eine gute Farbneutralität auftritt, wenn der Brechungsindex zunächst von einem niedrigen Wert ausgehend von einer Teilschicht zur nächsten ansteigt. Die erreichbare Farbneutralität lässt sich noch verbessern, wenn nach Erreichen eines maximalen Wertes der Brechungsindex wieder abnimmt. Besonders günstig es ist, wenn der Anstieg des Brechungsindex über wenigstens zwei, bevorzugt wenigstens drei oder sogar mehr als drei Teilschichten erfolgt, und/oder wenn die Abnahme des Brechungsindex über wenigstens zwei, bevorzugt wenigstens drei oder sogar mehr als drei Teilschichten erfolgt.

Konkret bedeutet dies, dass gemäß einer bevorzugten Ausführungsform der Erfindung die Teilschicht, welche dem Substrat am nächsten angeordnet ist, einen im Vergleich zu den anderen Teilschichten der Verschleißschutzschicht niedrigen, bevorzugt den niedrigsten Brechungsindex aufweisen kann, welcher dann von Teilschicht zu Teilschicht größer wird bis zu einem maximalen Brechungsindex, welcher vorzugsweise im Bereich der mittleren Teilschicht einer mehrlagigen Verschleißschutzschicht angeordnet sein kann, und sodann wieder abnimmt. In einer besonders günstigen Ausführungsform ist dieser Brechungsindex an denjenigen des Substrates angepasst.

Die Erfinder haben herausgefunden, dass der Gradient des Brechungsindex $\Delta n$ zweier benachbarter Teilschichten bei einer Wellenlänge von 500 nm dabei vorzugsweise wenigstens $\Delta n = 0{,}01$ und nicht mehr als $\Delta n = 0{,}3$ beträgt, um eine möglichst hohe Absorption der Lichtstrahlen zu erreichen.

Vorzugsweise weist die dem Substrat am nächsten liegende Teilschicht einen Brechungsindex bei einer Wellenlänge von 500 nm auf, welcher im Bereich des Brechungsindex des Substrates liegt oder zumindest um nicht mehr als $n = 0{,}1$ von diesem abweicht. Bei einem Substrat aus Glaskeramik beispielsweise mit einem Brechungsindex von $n = 1{,}54$ kann der Brechungsindex der direkt angrenzenden, ersten Teilschicht dann zwischen $n = 1{,}53$ und $n = 1{,}55$ betragen.

Es wurde herausgefunden, dass der niedrigste für die Erfindung günstige Brechungsindex einer Teilschicht bei einer Wellenlänge von 500 nm bei etwa $n = 1{,}5$ liegt. Der höchste geeignete Brechungsindex einer Teilschicht liegt bei einer Wellenlänge von 500 nm bei etwa $n = 4$. Dies führt dazu, dass die Farbneutralität der Verschleißschutzschicht insbesondere bei unterschiedlichen Auftreffwinkeln von Lichtstrahlen, etwa von unterschiedlichen Lichtquellen oder Lichtstrahlern einer Deckenbeleuchtung erhalten bleibt.

In einer günstigen Ausführungsform weisen damit zumindest drei, bevorzugt mehr als drei aufeinanderfolgende Teilschichten einen positiven Brechungsindex-Gradienten auf, woraufhin zumindest drei, bevorzugt mehr als drei aufeinanderfolgende Teilschichten dann einen negativen Brechungsindex-Gradienten aufweisen können. Dies vermindert die unterschiedliche Wahrnehmung des mit der Verschleißschutzschicht versehenen Substrates bei einem Wechsel zwischen Tageslicht und künstlichem Licht mittels LED-Lichtquellen.

In einer weiteren günstigen Ausführungsform der Erfindung ist vorgesehen, mehrere derartige alternierende Teilschichtsystem aufeinander aufzubauen, also beispielsweise nach mehreren Teilschichten mit positiven Brechungsindex-Gradienten und weiteren Teilschichten mit negativen Brechungsindex-Gradienten wiederum eine oder mehrere Teilschichten mit positiven Brechungsindex-Gradienten vorzusehen.

In einer besonders günstigen Ausführungsform kann die dem Substrat am nächsten liegende Teilschicht einen Brechungsindex aufweisen, welcher gleich oder ähnlich dem Brechungsindex der am weitesten entfernten Teilschicht ist.

Der Brechungsindex-Gradient kann dabei vom Betrag her konstant von Teilschicht zu Teilschicht sein, aber auch variierend.

Um die Farbneutralität der Verschleißschutzschicht zu verbessern, ist es weiterhin vorteilhaft, wenn die einzelnen Teilschichten der Verschleißschutzschicht eine geringe Dicke aufweisen. Von Vorteil ist die Dicke der einzelnen Teilschichten zumindest auf dasjenige Wellenlängenspektrum von Licht oder Lichtquellen abgestellt, welches bei der Verwendung des Substrates am häufigsten vorkommt.

Dies ist dem Umstand geschuldet, dass es für die farbneutrale Wirkung vorteilhaft ist, wenn die Dicke der Teilschichten geringer als die maximale Wellenlänge des sichtbaren Lichts ist. Die Dicke zumindest einer Teilschicht der Verschleißschutzschicht ist damit vorzugsweise geringer oder gleich 780 nm.

Hierdurch kann eine Absorbierung eintretender Strahlen bei Durchdringung der Teilschichten erreicht werden. Das zugrundeliegende Prinzip beruht darauf, dass elektromagnetische Strahlung einer bestimmten Wellenlänge teilweise an der Oberfläche einer Teilschicht reflektiert wird und teilweise die Teilschicht passiert, woraufhin es an der im Strahlengang nächstliegenden Teilschicht wiederum teilweise reflektiert wird und teilweise diese nächstliegende Teilschicht passiert. Elektromagnetische Strahlung einer bestimmten Wellenlänge kann dann sehr gut destruktiv interferieren, also absorbiert werden, wenn die Amplituden der sich ergebenden Teilstrahlen gleich groß und gegenphasig zueinander sind.

Sofern die Verschleißschutzschicht mehrere Teilschichten umfasst, können diese auch unterschiedliche Dicken aufweisen. So können sie besonders günstig auf die konkreten Beleuchtungssituationen und die Wellenlängenspektren der relevanten Lichtquellen abgestimmt werden.

In diesem Zusammenhang kann es günstig sein, wenn die Dicke abgestimmt ist auf diejenigen Wellenlängen bzw. Wellenlängenspektren der relevanten Lichtquellen, welche eine hohe spektrale Intensität aufweisen.

Am Beispiel von LED-Lichtquellen soll dies nachfolgend erläutert werden. Led-Lichtquellen verfügen häufig über ein erstes Wellenlängenspektrum mit stärkerer spektraler Intensität zwischen etwa 420 und 460 nm sowie ein zweites derartiges Wellenlängenspektrum zwischen etwa 500 und 600 nm. Ein Maximum der spektralen Intensität liegt dann typischerweise jeweils in den genannten jeweiligen Wertebereichen.

Die spektrale Intensität von LED-Lichtquellen kann bezüglich dieser beiden Wellenlängenspektren und/oder der zugehörigen Maxima unterschiedlich ausgebildet sein. So kann beispielsweise im Fall von "Warmton"-LED-Lichtquellen der zweite Bereich stärker ausgebildet sein, das zugehörige Wellenlängenspektrum also eine höhere spektrale Intensität in dem Bereich zwischen 500 und 600 nm aufweisen, als in dem ersten Wellenlängenspektrum. In diesem Fall ist das zum zweiten Wellenlängenspektrum gehörende Maximum das absolute Maximum. Im Fall von "kalten" LED-Lichtquellen ist typischerweise das erste Maximum das absolute Maximum.

Die Verschleißschutzschicht kann beispielsweise vollständig amorph oder kristallin ausgebildet sein. Die Verschleißschutzschicht kann aber auch in einer weiteren Ausführungsform amorph ausgebildet sein und dabei kristalline Anteile umfassen, wobei der amorphe Anteil überwiegt. Ebenso kann die Verschleißschutzschicht in einer nochmals weiteren Ausführungsform kristallin ausgebildet sein und dabei amorphe Anteile umfassen, wobei der kristalline Anteil dann überwiegt. Dabei beträgt in günstigen Ausführungsformen der kristalline bzw. amorphe Anteil in der jeweiligen amorphen bzw. kristallinen Verschleißschutzschicht zwischen 0,001 Gew.-% bis 20 Gew.-%. In einer nochmals weiteren Ausführungsform kann die Verschleißschutzschicht sowohl amorphe als auch kristalline Bereiche umfassen.

Im Allgemeinen kann die gewünschte geringe Transparenz der Verschleißschutzschicht durch die Größe der einzelnen Kristallite erzielt werden. So werden durch die Größe beispielsweise Streueffekte hervorgerufen. In einer Ausführungsform der Erfindung beträgt die mittlere Kristallgröße dabei wenigstens 5 nm, bevorzugt wenigstens 15 nm und besonders bevorzugt 30 bis etwa 50 nm. In anderen Ausführungsformen, beispielsweise bei Mischsystemen, kann die mittlere Kristallgröße in einem Bereich von beispielsweise 5 bis 15 nm liegen.

Die Kristallgröße, insbesondere bei einer mittleren Kristallgröße von weniger als 30 nm, kann beispielsweise mittels Elektronenmikroskopie, insbesondere mittels Transmissionselektronenmikroskopie, bestimmt werden. Die Kristallinität kann beispielsweise mittels Röntgenbeugung oder Elektronenmikroskopie bestimmt werden.

Die erfindungsgemäße Verschleißschutzschicht ist oder umfasst vorzugsweise zumindest eine Hartstoffschicht auf Basis von Titanaluminium-Karbonitrid (TiAlCN), Titanaluminium-Nitrid (TiAlN), Titanaluminium-Carbid (TiAlC), Titanaluminium-Oxycarbid (TiAlOC), auf der Basis von Kohlenstoff als DLC-Schicht (DLC = "diamond like carbon") oder wasserstofffreies ta-C, Siliziumcarbid (SiC) oder Aluminiumchrom-Nitrid (AlCrN). Weitere absorbierende Materialien insbesondere Carbide sind ebenfalls möglich. Die Verschleißschutzschicht kann demnach eine Titanaluminium-Karbonitrid-Schicht (TiAlCN), eine Titanaluminium-Nitrid-Schicht (TiAlN), eine Titanaluminium-Carbid-Schicht (TiAlC), eine Titanaluminium-Oxycarbid-Schicht (TiAlOC), eine Kohlenstoffschicht (DLC-Schicht), eine ta-C-Schicht (ta-C = tetraedische amorphe Kohlenstoffschicht), eine Siliziumcarbid-Schicht (SiC), eine Aluminiumchromnitrid-Schicht (AlCrN) sein oder umfassen.

Die vorstehend genannten Schichten können als reine Schichten vorliegen. Sie können aber auch weitere Bestandteile, beispielsweise ein oder mehrere weitere Nitride, Carbide und/oder Carbonitride, Oxicarbide und/oder Oxinitride enthalten, wobei es sich bevorzugt um die entsprechenden Verbindungen der Elemente Aluminium, Silizium, Bor, Zirkon, Titan, Nickel, Chrom, Wolfram, Molybdän oder Kohlenstoff handelt. Die erfindungsgemäße Verschleißschutzschicht kann wenigstens eines der chemischen Elemente O, N, C, Al, Si, Mg umfassen. Diese weiteren Bestandteile können beispielsweise in einem Anteil von 0,001 Gew.-% bis 20 Gew.-%, vorzugsweise 0,01 Gew.-% bis 10 Gew.-%, besonders bevorzugt 0,1 Gew-% bis 1 Gew.-% vorliegen.

Hierdurch können bestimmte Eigenschaften der Verschleißschutzschicht wie beispielsweise Härte, E-Modul oder die Widerstandsfähigkeit gegen Abrieb, beispielsweise die Polierresistenz, weiter modifiziert werden.

Gemäß einer weiteren Ausführungsform der Erfindung kann die Beschichtung neben der Verschleißschutzschicht weitere Schichten umfassen. In einer Weiterbildung der Erfindung kann daher zwischen der Oberfläche des Substrates und der Verschleißschutzschicht zumindest eine weitere Schicht aufgebracht sein, welche reine Metalle oder Legierungen oder Nitride, Oxide, Carbide, Oxicarbide, Carbonitride und/oder Oxinitride umfassen kann ausgewählt aus der Gruppe der Elemente Aluminium, Silizium, Bor, Zirkon, Titan, Nickel, Chrom, Magnesium, Molybdän, Zink, Mangan oder Kohlenstoff.

Diese weitere Schicht kann beispielsweise eine optische Anpassschicht umfassen, um den Brechungsindex zwischen Substrat und Verschleißschutzschicht anzupassen.

Die weitere Schicht kann auch eine Diffusionsbarriereschicht umfassen oder als Diffusionsbarriereschicht ausgebildet sein, um Diffusionsprozesse zwischen Substrat und Verschleißschutzschicht zu reduzieren oder zu vermeiden.

Die weitere Schicht kann auch eine Haftvermittlerschicht umfassen. Diese kann zwischen dem Substrat und der Verschleißschutzschicht angeordnet sein und verbessert die Anhaftung der Verschleißschutzschicht auf dem Substrat. Dies ist insbesondere dann vorteilhaft, wenn die thermischen Ausdehnungskoeffizienten von Substrat und Verschleißschutzschicht sich deutlich unterscheiden. Als besonders vorteilhaft haben sich hierbei solche Haftvermittlerschichten herausgestellt, die aus reinen Metallen, Legierungen oder Nitriden, Oxiden, Carbiden, Carbonitriden und/oder Oxynitriden der Elemente Aluminium, Silizium, Bor, Zirkon, Titan, Nickel, Chrom und/oder Kohlenstoff gebildet werden.

Die Haftvermittlerschicht kann hierbei auftretende Spannungen reduzieren, zumindest führt sie zu einer starken chemischen Anbindung an das Substrat. Eine entsprechende enge Anpassung der thermischen Ausdehnungskoeffizienten von Substrat und Verschleißschutzschicht ist daher nicht notwendig. Dies ermöglicht eine breite Auswahl an geeigneten Substratmaterialien. Die Abscheidung kann beispielsweise über PVD, CVD oder Sol-Gel-Verfahren erfolgen.

Gemäß einer weiteren Ausführungsform der Erfindung kann beispielsweise eine Deckschicht vorgesehen sein, welche oberhalb der Verschleißschutzschicht angeordnet ist. Die Bezeichnung oberhalb bezieht sich auf den Aufbau der Beschichtung ausgehend vom Substrat, d.h. die Verschleißschutzschicht ist somit zwischen dem Substrat und der Deckschicht angeordnet. Durch das Aufbringen einer Deckschicht auf die Verschleißschutzschicht können einzelne Eigenschaften wie z.B. das optische Erscheinungsbild oder die Poliereigenschaften gegenüber einem bestimmten Poliermedium modifiziert werden.

Eine Ausführungsform der Erfindung sieht vor, dass die Deckschicht durch Nitride, Oxide, Carbide, Carbonitride und/oder Oxinitride ausgewählt aus der Gruppe der Elemente Aluminium, Silizium, Bor, Zirkon, Titan, Nickel oder Kohlenstoff gebildet wird. Die Deckschicht kann als eine Mischschicht mehrerer der oben genannten Verbindungen oder als eine Schicht einer Verbindung ausgebildet sein. Bevorzugt wird die Deckschicht durch Sputtern aufgebracht. Alternativ können auch CVD oder Sol Gel Technologien eingesetzt werden. Bei der Deckschicht kann es sich beispielsweise um eine $SiO_x$-haltige Schicht handeln. Es ist auch möglich, abhängig von der Schichtdicke der Deckschicht auch den Farbort der Reflexionsfarbe und/oder die Reflexionseigenschaften der darunterliegenden Verschleißschutzschicht zu verändern.

In einer weiteren Ausführungsform kann die Verschleißschutzschicht eine kohlenstoffhaltige Deckschicht aufweisen. Der Kohlenstoffgehalt der Deckschicht führt dabei zu einer Verringerung des Reibwertes, was insbesondere bei beschichteten Substraten, die als Kochfläche verwendet werden, vorteilhaft ist, da sich so die Töpfe leichter auf der Kochfläche verschieben lassen. Des Weiteren können die Poliereigenschaften und die Resistenz der Beschichtung gegenüber Poliermedien verbessert werden. Die Deckschicht kann beispielsweise Carbide und/oder Graphit enthalten.

In einer weiteren Ausführungsform der Erfindung kann die Verschleißschutzschicht zumindest einen Bereich umfassen, welcher nicht elektrisch leitfähig bei Raumtemperatur ist. Hierunter wird im Sinne der Erfindung verstanden, dass die Verschleißschutzschicht einen Flächenwiderstand von wenigstens 1 kΩ/square, bevorzugt wenigstens 0,5 MΩ/square und besonders bevorzugt wenigstens 2 MΩ/square, vorzugsweise gemessen mit einer Vierpunktmessung, aufweist. Ein derart hoher Flächenwiderstand ermöglicht es, insbesondere kapazitive Berührungssensoren unterhalb des Substrates mit der Verschleißschutzschicht anzuordnen, deren Verwendung bei einer höheren Leitfähigkeit der Beschichtung aufgrund parasitärer Kapazitäten nicht oder nur mit erheblich reduzierter Empfindlichkeit möglich wäre.

Auch der Einsatz von Induktionsspulen unterhalb des Substrates mit der Verschleißschutzschicht wird hierdurch ermöglicht, da das von solchen Spulen erzeugte Wechselmagnetfeld bei einem entsprechend hohen elektrischen Widerstand der Verschleißschutzschicht nicht durch die Beschichtung gedämpft oder gestreut wird.

Eine Streuung von Magnetwechselfeldern findet beispielsweise bei Schichten mit einem Widerstand von weniger als 1 kΩ/square und einer Schichtdicke, die geringer ist als die Eindringtiefe des Magnetfeldes, statt und führt zu einer schlechten elektromagnetischen Verträglichkeit des Gesamtsystems. Induktionsspulen können beispielsweise als Heizelemente oder zur kabellosen Energieübertragung vorgesehen sein.

In einer weiteren Ausführungsform der Erfindung kann die Oberfläche der Verschleißschutzschicht, zumindest in Abschnitten, eine Mottenaugenstruktur umfassen. Hierunter ist zu verstehen, dass die Oberfläche der Verschleißschutzschicht Mikro- und/oder Nanostrukturen umfasst, vorzugsweise kegel- oder pyramidenförmige Nanostrukturen. Diese können beispielsweise mittels Ätzen, Plasmaverfahren wie PECVD oder Elektronenstrahl-Lithographie erzeugt werden. Dies unterstützt zusätzlich die Reduzierung von unerwünschten Reflektionen an der Oberfläche und erhöht damit die Farbneutralität der Verschleißschutzschicht.

Auf Grund der hohen Temperaturstabilität kann die Verschleißschutzschicht bzw. entsprechend beschichtete Substrate in unterschiedlichen Heißbereichen, beispielsweise im Fall einer Glaskeramik als Kochfläche oder im Fall einer Glasscheibe als Ofensichtscheibe, verwendet werden.

Insbesondere bei Kochflächen wird häufig ein Dekor auf die Glaskeramikoberfläche aufgedruckt. Eine Weiterbildung der Erfindung kann daher vorsehen, dass das Substrat zumindest teilweise mit einer Dekorschicht versehen wird.

Die erfindungsgemäße Verschleißschutzschicht bzw. ein mit der erfindungsgemäßen Verschleißschutzschicht versehenes Substrat kann auf vielen technischen Gebieten verwendet werden, bei denen die Oberfläche einer mechanischen Beanspruchung ausgesetzt ist und/oder bei welchen eine farbneutrale Betrachtung in Reflexion bei allen gängigen Lichtquellen wie Halogen, LED, Energiesparlampe, Tageslicht oder Leuchtstoffröhre notwendig ist und nur eine geringe Transparenz gegeben ist.

Selbstverständlich ist es hierzu möglich, die gesamte Oberfläche des Substrates vollständig mit der erfindungsgemäßen Verschleißschutzschicht zu versehen und damit die relevante Oberfläche vollflächig zu beschichten, oder nur diejenigen Teilbereiche der Oberfläche des Substrates, welche mechanischen Beanspruchungen ausgesetzt sind und/oder bei welchen eine farbneutrale Wirkung gewünscht ist.

Das mit der erfindungsgemäßen Verschleißschutzschicht beschichtete Substrat kann damit insbesondere als optisches Bauteil, als Kochfläche, als Heizplatte, als Warmhalteplatte, als Glas- oder Glaskeramikarbeitsplatte, für Glas- oder Glaskeramikbauteile in Haushaltsgeräten, als Ofensichtscheibe, als Kaminsichtscheibe, als Backofensichtscheiben, für Kühlschrank- und Küchenfronten, als Sichtscheiben im Fahrzeugbereich, für Uhrengläsern, für Brillen, etwa VR- oder AR-Brille, oder als Display beispielsweise für Tablet-PCs oder Mobiltelefone, insbesondere auch als Touchdisplay, verwendet werden.

Die Verschleißschutzschicht bzw. das erfindungsgemäß beschichtete Substrat kann dabei insbesondere mit einem Verfahren hergestellt werden, dass zumindest die folgenden Schritte umfasst:

a) Bereitstellen eines Substrates in einer Sputtervorrichtung mit einem Target

b) Abgabe von gesputterten Partikeln mit einer Leistung im Bereich von 8 bis 1000 W/cm$^2$, bevorzugt 10 - 100 W/cm$^2$ pro Targetfläche.

Die Beschichtung des Substrates in Schritt b) erfolgt dabei ab niedrigen Enddrücken. So liegt der Enddruck in der Beschichtungsanlage, d.h. der Druck, ab dem ein Beschichtungsvorgang gestartet werden kann, bei höchstens 2*10$^{-5}$ mbar, bevorzugt sogar bei Drücken im Bereich von 1*10$^{-6}$ bis 5*10$^{-6}$ mbar oder weniger. Durch die geringen Enddrücke wird die Fremdgasmenge minimiert, d.h. der Beschichtungsprozess wird in einer sehr reinen Atmosphäre durchgeführt. Dies gewährleistet eine hohe Reinheit der aufgebrachten Schichten. So wird durch prozessbedingten geringen Restgasgehalt die Bildung von Oxidbestandteilen durch den Einbau von Sauerstoff vermieden.

Dies ist insbesondere in Hinblick auf das Kristallwachstum von Bedeutung, da dieses durch Oxidbestandteile gestört werden kann.

Bevorzugt kann somit eine Beschichtung mit einem Sauerstoffgehalt von maximal 10 at-%, besonders bevorzugt von maximal 5 at-% oder sogar maximal 2 at-% erhalten werden. Dagegen wird bei konventionellen Sputterprozessen mit einem Enddruck im Bereich von zumindest 5*10$^{-5}$ mbar beschichtet, entsprechend ist hier der Sauerstoffanteil in der abgeschiedenen Beschichtung höher.

Beim Sputterprozess wird nach Erreichen des erfindungsgemäßen Enddrucks z.B. ein stickstoffhaltiges Prozessgas eingeleitet. Der Anteil des Stickstoffs am Gesamtfluss beträgt in diesem Beispiel zumindest 30 Vol.-%, bevorzugt zumindest 40 Vol.-% und besonders bevorzugt zumindest 50 Vol.-%. Über den Anteil des Stickstoffs am Gesamtfluss während des Sputterprozesses kann die chemische Resistenz der abgeschiedenen Schicht, beispielsweise gegenüber Spülmitteln oder Reinigungsmitteln beeinflusst werden. So steigt die Resistenz der Schicht gegenüber Chemikalien mit steigendem Stickstoffanteil.

Die Beschichtung in Schritt b) erfolgt mit hohen Sputterleistungen. Die Sputterleistungen im erfindungsgemäßen Verfahren betragen hierbei zumindest 8 - 1000 W/cm$^2$, bevorzugt zumindest 10 - 100 W/cm$^2$. In einer Ausführungsform der Erfindung wird ein Magnetronsputtern, ein Ionenstrahlsputterverfahren, ein Arc-basiertes Sputterverfahren, also eine Vakuumbogenbeschichtung, oder ein High Power Impulse Magnetron Sputtering-Verfahren (HiPIMS) angewendet. Alternativ oder zusätzlich kann zwischen dem Target und dem Substrat eine negative Spannung oder eine Wechselspannung aufrechterhalten werden. Die Beschichtung kann alternativ oder zusätzlich mit Unterstützung von Ionenbeschuss, bevorzugt mit Ionenbeschuss aus einer Ionenstrahlquelle und/oder durch Anlegen einer Spannung am Substrat erfolgen.

Gemäß einer Ausführungsform der Erfindung werden die durch das Sputtern erzeugten Partikel bei einer Depositionstemperatur größer als 100°C, bevorzugt größer 200°C und besonders bevorzugt größer 300°C abgeschieden. In Kombination mit den niedrigen Prozessdrücken sowie der hohen Sputterleistungen kann somit das Wachstum der Kristallite, insbesondere die Kristallitgröße und die Vorzugsrichtung der Kristallstruktur, in besonders vorteilhafter Weise beeinflusst werden. Es ist jedoch auch eine Abscheidung bei niedrigeren Temperaturen, beispielsweise bei Raumtemperatur, möglich. Die gemäß dieser Ausführungsform hergestellten Hartstoffschichten zeigen ebenfalls gute mechanische Eigenschaften wie eine hohe Kratzresistenz.

Bei dem Sputterprozess kann es sich um eine kontinuierliche Deposition auf dem Substrat handeln. Alternativ kann der Sputtervorgang auch derart durchgeführt werden, dass die abgeschiedenen Schichten Interfaces aufweisen bzw. aus Interfaces bestehen, welche auf Grund der Prozessierung beim Herausfahren aus dem Beschichtungsbereich entstehen.

In Schritt a) kann als Substrat beispielsweise eine Glaskeramik, ein Saphirglas, ein Borosilikatglas, ein Aluminosilikatglas, ein Kalk-Natronglas, ein synthetisches Quarzglas, ein Lithiumaluminosilikatglas, ein optisches Glas und/oder ein Kristall für optische Zwecke bereitgestellt werden.

In einer Ausführungsform der Erfindung enthält das Target Titan. Daneben kann es zumindest eines der Elemente Aluminium, Silizium, Bor, Zirkon, Nickel, Chrom, Magnesium, Molybdän, Zink, Mangan, Wolfram, Molybdän oder Kohlenstoff umfassen. Diese zusätzlichen Elemente werden im Sinne der Erfindung auch als Dotant bezeichnet. Bevorzugt ist der Anteil an Titan im Target in dieser Ausführungsform größer als 50 Gew.-%, besonders bevorzugt größer 60 Gew.-% und ganz besonders bevorzugt größer als 70 Gew.-%.

In einer Weiterbildung der Erfindung wird in Schritt a) ein Substrat bereitgestellt, welches eine Dekor- und/oder eine Haftvermittlerschicht aufweist. So ist beispielsweise eine Beschichtung von zumindest teilweise dekorierten Bereichen möglich und bleibt auch bei hohen Anwendungstemperaturen resistent. Auch Flachfacetten sind ohne optische Veränderungen beschichtbar und zeigen eine gute mechanische Beständigkeit.

Alternativ oder zusätzlich wird in einem dem Schritt b) nachfolgenden Verfahrensschritt eine Deckschicht auf der Verschleißschutzschicht aufgebracht.

Gemäß einer Ausführungsform der Erfindung enthält die Haftvermittlerschicht und/oder die Deckschicht Nitride, Oxide, Carbide, Carbonitride und/oder Oxynitride eines oder mehrerer Elemente ausgewählt aus der Gruppe umfassend Aluminium, Silizium, Bor, Zirkon, Titan, Nickel, Chrom und Kohlenstoff. Die Haftvermittlerschicht und/oder die Deckschicht können auch als metallische Schicht vorliegen, insbesondere enthaltend, vorzugsweise bestehend aus einem oder mehreren der folgenden Metalle: Aluminium, Silizium, Bor, Zirkon, Titan, Nickel oder Chrom.

Bevorzugt werden auch die Haftvermittlerschicht und/oder Deckschicht durch einen Sputterprozess aufgebracht, kann aber auch durch andere Verfahren dargestellt werden.

Die Erfindung wird nachfolgend anhand bevorzugter Ausführungsformen und unter Bezugnahme auf die beigefügten Figuren detaillierter beschrieben.

Die Zeichnungen zeigen:

Fig. 1 eine schematische Darstellung eines erfindungsgemäß beschichteten Substrates mit einer Verschleißschutzschicht,

Fig. 2 eine schematische Darstellung einer Ausführungsform der Erfindung mit zusätzlicher Haftvermittlerschicht zwischen dem Substrat und der Verschleißschutzschicht,

Fig. 3 eine schematische Darstellung einer Ausführungsform der Erfindung mit zusätzlicher Deckschicht, aufgebracht auf der Verschleißschutzschicht,

Fig. 4 eine schematische Darstellung einer Ausführungsform der Erfindung mit zusätzlicher Haftvermittlerschicht und zusätzlicher Deckschicht,

Fig. 5 eine schematische Darstellung einer Ausführungsform der Erfindung mit einer Verschleißschutzschicht auf einem Substrat, wobei die Verschleißschutzschicht insgesamt vier Teilschichten mit verschiedenen Brechungsindex umfasst,

Fig. 6 eine weitere schematische Darstellung einer Ausführungsform der Erfindung mit einer Verschleißschutzschicht auf einem Substrat, wobei die Verschleißschutzschicht insgesamt sechs Teilschichten mit verschiedenen Dicken umfasst,

Figuren 7a und 7b die jeweiligen Spektralkurven für die Normlichtarten A und C,

Fig. 8 Reflexionsspektren verschiedener Verschleißschutzschichten, und

Fig. 9 eine vergrößerte Darstellung der Reflexionsspektren verschiedener Verschleißschutzschichten gemäß Fig. 8, bei der der sichtbare Wellenlängenbereich zwischen 380 nm und 780 nm dargestellt ist.

Detaillierte Beschreibung bevorzugter Ausführungsformen

Bei der nachfolgenden detaillierten Beschreibung bevorzugter Ausführungsformen bezeichnen um der Klarheit willen gleiche Bezugszeichen im Wesentlichen gleiche Teile in oder an diesen Ausführungsformen. Zur besseren Verdeutlichung der Erfindung sind die in den Figuren dargestellten bevorzugten Ausführungsformen jedoch nicht immer maßstabsgerecht gezeichnet.

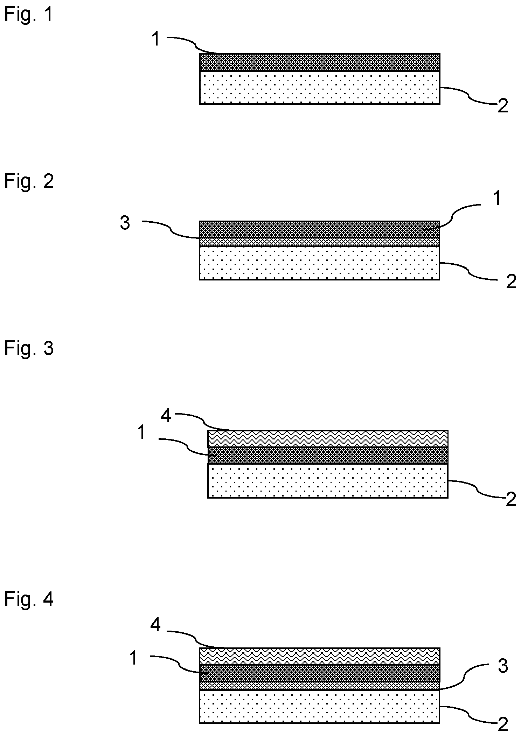

In Fig. 1 wird schematisch ein erfindungsgemäß beschichtetes Substrat 2 dargestellt. Hierbei ist das Substrat 2 mit einer Verschleißschutzschicht 1 beschichtet.

Fig. 2 zeigt schematisch ein weiteres Ausführungsbeispiel, bei dem zwischen dem Substrat 2 und der Verschleißschutzschicht 1 eine weitere Schicht 3 angeordnet ist. Bei der zusätzlichen Schicht 3 kann es sich beispielsweise um eine Dekorschicht oder eine Haftvermittlerschicht handeln. Auch solche Schichten 3, die aus mehreren Teilschichten, beispielsweise einer Dekor- und einer Haftvermittlerschicht, bestehen, sind möglich. Das Substrat kann dabei vollständig oder auch nur teilweise mit der Schicht 3 versehen werden. Die Verschleißschutzschicht 1 ist dabei über der zusätzlichen Schicht 3 angeordnet, d.h. die zusätzliche Schicht 3 ist somit zwischen Substrat 2 und Verschleißschutzschicht 1 angeordnet.

Bei Ausführungsformen mit einer Haftvermittlerschicht als zusätzliche Schicht 3 handelt es sich bei der Schicht 3 bevorzugt um eine dotierte AlN-Schicht bzw. eine Mischschicht. Abhängig von der Zusammensetzung der Haftvermittlerschicht kann diese beispielsweise einen thermischen Ausdehnungskoeffizienten aufweisen, welcher zwischen den thermischen Ausdehnungskoeffizienten von Substrat 2 und Verschleißschutzschicht 1 liegt. Somit können Spannungen zwischen Substrat 2 und Verschleißschutzschicht 1 durch die Haftvermittlerschicht 3 verringert werden.

Bevorzugt weist die Haftvermittlerschicht 3 eine Dicke im Bereich von 1 bis 900 nm, besonders bevorzugt im Bereich von 1 bis 500 nm, besonders bevorzugt im Bereich von 1 bis 50 nm auf. Gemäß einem Ausführungsbeispiel weist der beschichtete Gegenstand zwischen Substrat 2 und der Verschleißschutzschicht 1 als Haftvermittlerschicht 3 eine $Al_2O_3$-Beschichtung mit einer Schichtdicke von 50 nm auf.

Die weitere Schicht 3 kann auch eine optische Anpassschicht umfassen, um den Brechungsindex zwischen Substrat 2 und Verschleißschutzschicht 1 anzupassen.

Die weitere Schicht 3 kann ferner auch eine Diffusionsbarriereschicht umfassen oder als Diffusionsbarriereschicht ausgebildet sein, um Diffusionsprozesse zwischen Substrat 2 und Verschleißschutzschicht 1 zu reduzieren oder zu vermeiden.

In Fig. 3 ist eine weitere Ausführungsform der Erfindung schematisch dargestellt. Hierbei wird eine Deckschicht 4 auf die Verschleißschutzschicht 1 aufgebracht. Die Deckschicht 4 enthält in diesem Ausführungsbeispiel $SiO_2$ und weist eine Schichtdicke von 1 bis 100 nm auf.

Fig. 4 zeigt ein weiteres Ausführungsbeispiel, bei dem das beschichtete Substrat neben der Verschleißschutzschicht 1 sowohl eine zusätzliche Schicht 3 als auch eine Deckschicht 4 aufweist.

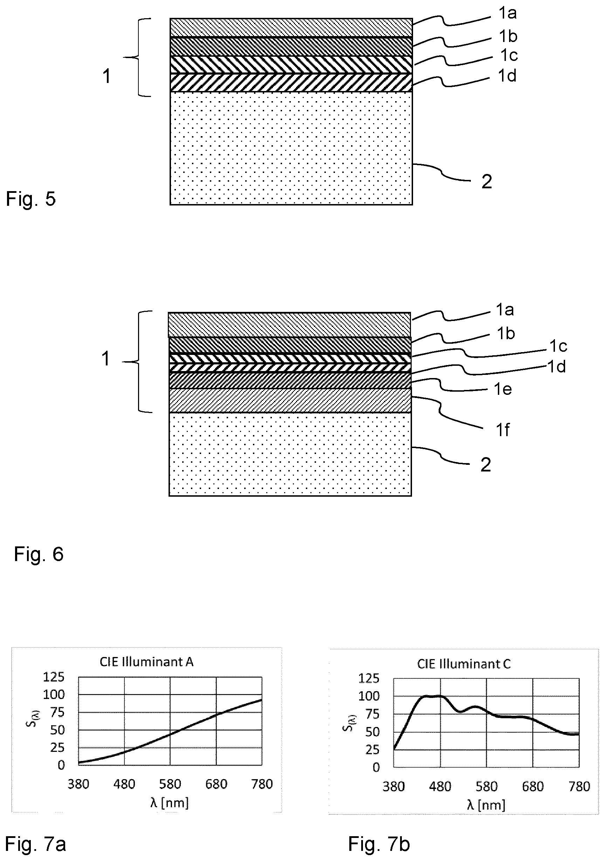

Fig. 5 zeigt eine weitere schematische Darstellung einer Ausführungsform der Erfindung mit einer Verschleißschutzschicht 1 auf einem Substrat 2, wobei die Verschleißschutzschicht 1 insgesamt vier Teilschichten 1a, 1b, 1c und 1d umfasst, und wobei zumindest zwei dieser Teilschichten 1a, 1b, 1c oder 1d einen unterschiedlichen Brechungsindex aufweisen. Hierunter wird verstanden, dass der Betrag der beiden Brechungsindizes um wenigstens 0,01 voneinander abweicht.

Die Verschleißschutzschicht dieser Ausführungsform mit vier Schichten basiert auf dem Material TiAlON mit folgendem Gewichtsanteil für sämtliche vier Schichten: Ti:Al =85:15 Gew.-%. Sämtliche Teilschichten weisen ohne Beschränkung auf dieses Ausführungsbeispiel eine Schichtdicke von 100 nm auf. Dagegen variieren die Sauerstoff- und Nitridanteile von Schicht zu Schicht. Das Verhältnis von Sauerstoff zu Nitrid der einzelnen Teilschichten beträgt dabei für die

Teilschicht 1a: O:N = 50:50
Teilschicht 1b: O:N = 33:77
Teilschicht 1c: O:N = 17:83
Teilschicht 1d: O:N = 50:50

Die Verschleißschutzschicht gemäß dieser Ausführungsform verfügt über eine verspiegelte Oberfläche, wobei der Reflexionsgrad im sichtbaren Wellenlängenbereich bei wenigstens 90 % liegt, und ist zudem elektrisch leitend.

Als besonders günstig hat sich gezeigt, dass die Haftung der Verschleißschutzschicht auf dem Substrat besonders gut ist, da die Schichtspannungen durch Veränderung des Sauerstoffanteils in den einzelnen Teilschichten deutlich reduziert werden können.

Durch Variieren des Verhältnisses von Sauerstoff zu Nitrid zwischen benachbarten Teilschichten einer erfindungsgemäßen Verschleißschutzschicht bei ansonsten gleichem Material können einerseits besonders einfach Unterschiede in den Ausdehnungskoeffizienten beim Übergang zum Substrat ausgeglichen werden, andererseits ermöglicht dies auch eine vergleichsweise einfache Fertigung, da - etwa beim Sputtern - gleiche Targets verwendet werden können.

Auf diese Weise kann die erfindungsgemäße Verschleißschutzschicht sehr einfach an in Bezug auf den Ausdehnungskoeffizienten unterschiedliche Substrate angepasst werden. Es hat sich als vorteilhaft herausgestellt, wenn der Sauerstoffanteil zwischen benachbarten Teilschichten um wenigstens 5 %, besonders bevorzugt um wenigstens 10 % variiert.

In anderen Ausführungsformen kann die Verschleißschutzschicht auf der vorstehend genannten Ausführungsform einer Verschleißschutzschicht mit vier Teilschichten aufbauen, und zusätzlich weitere Teilschichten umfassen, beispielsweise eine Deckschicht.

Weiterhin ist es auch möglich, die einzelnen Teilschichten in unterschiedlichen Dicken auszubilden, um beispielsweise zunächst größere Abweichungen im Ausdehnungskoeffizienten zwischen Verschleißschutzschicht und Substrat durch mehrere Teilschichten geringer Dicke auszugleichen, und darauf aufbauend weitere Teilschichten mit geringerer Dicke vorzusehen, welche die gewünschten optischen und/oder mechanischen Eigenschaften zur Verfügung stellen.

Fig. 6 zeigt eine weitere schematische Darstellung einer derartigen Ausführungsform der Erfindung mit einer Verschleißschutzschicht 1 auf einem Substrat 2, wobei die Verschleißschutzschicht 1 insgesamt sechs Teilschichten 1a, 1b, 1c, 1d, 1e und 1f umfasst, und wobei zumindest zwei dieser Teilschichten 1a, 1b, 1c, 1d, 1e und 1f eine unterschiedliche Dicke aufweisen.

Die Verschleißschutzschicht 1 ist in den Ausführungsbeispielen ganzflächig auf einer Oberfläche des Substrates 2 aufgebracht. Es ist aber auch möglich, lediglich Teilbereiche des Substrates 2 mit der Verschleißschutzschicht 1 zu versehen.

Die Verschleißschutzschicht 1 weist eine Buntheit im CIELAB-Farbsystem von C* kleiner 14, bevorzugt kleiner 7 und besonders bevorzugt kleiner 4 auf bei Lichteinstrahlung, gemessen in Remission mit Licht der Normlichtart A oder der Normlichtart C oder bei Schwarzkörperstrahlung mit einer Farbtemperatur zwischen 2.500 K und 10.000 K. Im dargestellten Ausführungsbeispiel beträgt der Wert für die Buntheit etwa 2.

Zusätzlich weist die Verschleißschutzschicht 1 einen Lichttransmissionsgrad von weniger als 60 %, bevorzugt weniger als 50 % und besonders bevorzugt weniger als 40 %, gleich oder weniger als 35 %, gleich oder weniger als 5 %, gleich oder weniger als 2,5 % oder gleich oder weniger als 1 %, gemessen bei einer Schichtdicke von 1.000 nm in einem Wellenlängenspektrum von 380 nm bis 780 nm unter Verwendung von Licht der Normlichtart D65 gemäß DIN EN 410, auf. Der Lichttransmissionsgrad beträgt dabei aber wenigstens 0,001 %, mehr als 0,01 % oder sogar mehr als 0,1 %, mehr als 0,5 % oder auch mehr als 1 %. Die Verschleißschutzschicht 1 kann demnach als blickdicht bezeichnet werden. Im dargestellten Ausführungsbeispiel beträgt der Lichttransmissionsgrad etwa 50 %.

Die Verschleißschutzschicht 1 zeigt eine homogene Farbanmutung bei verschiedener Beleuchtung beziehungsweise bei unterschiedlichen Beleuchtungssituationen. Eine homogene Farbanmutung der Verschleißschutzschicht meint im Sinne der Erfindung, dass sich der Farbort des von der Verschleißschutzschicht 1 abgestrahlten Lichtes bei verschiedener Beleuchtung und vorzugsweise zusätzlich unter verschiedenen Blickwinkeln nicht oder kaum verändert, so dass die Verschleißschutzschicht 1 eine hohe Farbneutralität aufweist, wie weiter unten näher ausgeführt.

Das Substrat 2 ist in den Ausführungsbeispielen eine Glaskeramik. Weiterhin kann das Substrat 2 aber auch transparente oder transluzente, farblose oder volumengefärbte keramisierbare Gläser oder Glaskeramiken umfassen.

Das Substrat 2 kann zum Beispiel Saphirgläser, Borosilikatgläser, Aluminosilikatgläser, Kalk-Natrongläser, synthetische Quarzgläser (sogenannte "fused silica"-Gläser), Lithiumaluminosilikatgläser oder optische Gläser umfassen. Auch Kristalle für optische Anwendungen wie z.B. Kaliumfluoridkristalle oder Glaskeramiken können als Substrat 2 verwendet werden.

Bei den abgebildeten Ausführungsformen handelt es sich bei dem Substrat 2 um eine LAS-Glaskeramik mit einem thermischen Ausdehnungskoeffizienten $\alpha_{20-300}$ im Bereich +/-2*10$^{-6}$ K$^{-1}$ gemäß ISO 7991. Ein derart geringer thermischer Ausdehnungskoeffizient ermöglicht es, dass eine gute Temperaturbeständigkeit des beschichteten Substrates erreicht werden kann.

Die Verschleißschutzschicht 1 verfügt über eine große Härte und ein hohes E-Modul. Die Härte, gemessen nach DIN EN ISO 14577 (Martens-Härte) bei einer Prüfkraft von 10 mN, beträgt dabei vorzugsweise wenigstens 5 GPa, bevorzugt wenigstens 7 GPa, besonders bevorzugt 9 GPa oder sogar 11 GPa oder darüber hinaus.

Das E-Modul ist in der Verschleißschutzschicht 1 parallel zur Substratoberfläche am größten. In einer günstigen Ausführungsform weist die Verschleißschutzschicht 1 ein E-Modul parallel zur Substratoberfläche im Bereich von 10 bis 700 GPa, bevorzugt 200 bis 600 GPa, besonders bevorzugt 300 bis 500 GPa auf. Beispielsweise liegen TiN bei 250 GPa, TiCN bei 370 GPa, TiAlN bei 390 GPa und TiC bei 450 GPa.

Die Verschleißschutzschicht 1 des in Figur 5 gezeigten Ausführungsbeispiels weist etwa eine Härte von 9,5 GPa und ein E-Modul von 239 GPa auf, was eine hohe Kratzfestigkeit bedeutet, aber auch eine gute Haftung auf dem Substrat 2 ermöglicht.

Die Oberfläche der Verschleißschutzschicht 1 ist chemisch inert gegenüber Luft, Wasser, Reinigungsmitteln wie Essig- und Zitronensäure sowie anderen Substanzen, wie sie bei der Nahrungsmittelzubereitung verwendet werden, insbesondere Salzwasser.

Bei einem Vergleich zweier Flächen der Verschleißschutzschicht 1, wobei eine erste über einen Zeitraum von 24 Stunden einer Belastung mit einem potentiellen Reaktionspartner, im Beispiel Zitronensäure, ausgesetzt wurde, mit einer Vergleichsfläche der Verschleißschutzschicht 1, welche nicht einem potentiellen Reaktionspartner ausgesetzt wurde, konnte ein Farbabstand Delta E zwischen diesen beiden Flächen ermittelt werden, welcher nur $\Delta E_{p,v}$ = 0,9 beträgt. Die Einwirkung des potentiellen Reaktionspartners, also der Zitronensäure, erfolgte bei Raumtemperatur, wobei ein Tropfen Flüssigkeit auf die Verschleißschutzschicht aufpipettiert wurde und unter einer Uhrglasscheibe für 24 Stunden abgedeckt wurde.

Damit zeigt sich, dass die Verschleißschutzschicht 1 ihre Farbneutralität auch bei Angriffen mit potentiellen Reaktionspartnern beibehält. Erfindungsgemäß wird die Verschleißschutzschicht 1 als chemisch inert angesehen, wenn der Farbabstand zwischen der Fläche der Verschleißschutzschicht 1, welche einer Belastung mit dem potentiellen Reaktionspartner ausgesetzt wurde, und einer Vergleichsfläche $\Delta E_{p,v}$ < 4 beträgt, bevorzugt $\Delta E_{p,v}$ < 2 und besonders bevorzugt $\Delta E_{p,v}$ E < 1.

Die Oberfläche der Verschleißschutzschicht 1 und, in den gezeigten Ausführungsbeispielen, die Verschleißschutzschicht 1 insgesamt, ist vollständig frei von gesundheitsgefährdenden Stoffen. Dies betrifft insbesondere Materialien umfassend Arsen, Antimon, Blei, Quecksilber, Cadmium, sechswertiges Chrom oder Wismuth, aber auch Weichmacher (Phthalate) oder flüchtige organische Komponenten (VOCs). Demnach ist die Verschleißschutzschicht 1 frei von Arsen, Antimon, Blei, Quecksilber, Cadmium, sechswertiges Chrom oder Wismuth, sowie Weichmachern (Phthalate) und flüchtigen organischen Komponenten (VOCs).

Die Verschleißschutzschicht 1 in dem Ausführungsbeispiel weist eine Dicke von 1.000 nm auf. Im Allgemeinen ist aber bereits eine Schichtdicke von nur 500 nm, bevorzugt wenigstens 800 nm, besonders bevorzugt wenigstens 1.000 nm ausreichend, um den erfindungsgemäßen mechanischen Schutz zu erzielen und damit das Substrat vor mechanischen Belastungen, Verschleiß und Kratzern zu schützen.

Dickere Schichten bis 5.000 nm, bevorzugt weniger als 3.500 nm, und besonders bevorzugt weniger als 2.000 nm, sind ebenfalls möglich, welche einen besseren Schutz vor mechanischen Einwirkungen bieten und damit eine längere Haltbarkeit und, etwa im Fall von Kochflächen, eine edle Anmutung der Kochfläche auch nach vielen Jahren des Gebrauchs.

Die Verschleißschutzschicht 1 weist bei einer Einwirkdauer einer hohen Temperatur von 500 °C über 30 Minuten über eine Anzahl von wenigstens 100 Zyklen, vorzugsweise von wenigstens 1.000 Zyklen, keine nennenswerten Änderungen in ihrem Farbort auf und ist demzufolge als temperaturstabil im Sinne der Erfindung anzusehen.

Die Verschleißschutzschicht 1 wurde dabei jeweils von Raumtemperatur auf die Temperatur von 500 °C mit einem Temperaturanstieg von vorzugsweise zwischen 1 °C bis 50 °C, im Beispiel von etwa 5 °C pro Minute, erwärmt, gefolgt von einer Haltezeit von 30 Minuten und einem Abkühlen auf Raumtemperatur.

Als farb- und temperaturstabil im Sinne der Erfindung gilt eine Verschleißschutzschicht, bei welcher der Farbabstand der beiden Vergleichsflächen $\Delta E < 4$ beträgt, bevorzugt $\Delta E < 2$ und besonders bevorzugt $\Delta E < 1$. Insofern kann die Verschleißschutzschicht 1 als farbneutral, auch bei hohen Temperaturbelastungen, angesehen werden.

Die Verschleißschutzschicht 1 gemäß der abgebildeten Ausführungsform in Fig. 5 ist eine Hartstoffschicht auf Basis von Titanaluminium-Oxinitrid (TiAlON); in einer anderen, ebenfalls bevorzugten Ausführungsform basiert die Verschleißschutzschicht 1 auf Titanaluminium-Karbonitrid (TiAlCN).

Alternativ sind auch Verschleißschutzschichten 1 auf der Basis von Titanaluminium-Nitrid (TiAlN), Titanaluminium-Carbid (TiAlC), Titanaluminium-Oxycarbid (TiAlOC), auf der Basis von Kohlenstoff als DLC-Schicht (DLC = "diamond like carbon"), von tetraedischen amorphen Kohlenstoff ("ta-C"), Siliziumcarbid (SiC) oder von Aluminiumchrom-Nitrid (AlCrN) möglich.

Die Verschleißschutzschicht 1 kann aber auch weitere Bestandteile, beispielsweise ein oder mehrere weitere Nitride, Carbide und/oder Carbonitride, Oxicarbide und/oder Oxinitride enthalten, wobei es sich bevorzugt um die entsprechenden Verbindungen der Elemente Aluminium, Silizium, Bor, Zirkon, Titan, Nickel, Chrom oder Kohlenstoff handelt. Die Verschleißschutzschicht 1 kann wenigstens eines der chemischen Elemente O, N, C, Al, Si, Mg umfassen.

Hierdurch können bestimmte Eigenschaften der Verschleißschutzschicht 1 wie beispielsweise Härte, E-Modul oder die Widerstandsfähigkeit gegen Abrieb, beispielsweise die Polierresistenz, weiter modifiziert werden.

Die Verschleißschutzschicht 1 umfasst in einer weiteren Ausführungsform bevorzugt einen Bereich, welcher nicht elektrisch leitfähig bei Raumtemperatur ist. Allgemein wird im Sinne der Erfindung ein Flächenwiderstand von wenigstens 1 kΩ/square, bevorzugt wenigstens 0,5 MΩ/square und besonders bevorzugt wenigstens 2 MΩ/square gemessen mit einer Vierpunktmessung, als günstig angesehen.

Tabelle 1: Opake Schichten

| Bezeichnung | Farbort D65, 10° | | | | $\tau\_s$ | $\tau\_B$ | $\tau\_B/\tau\_s$ | Haze | Clarity |
|---|---|---|---|---|---|---|---|---|---|
| | L* | a* | b* | C* | % | % | % | % | % |
| Substrat S1 ohne Schicht | 24,9 | 0,2 | -0,9 | 0,9 | 1,2 | n.a. | n.a. | 20 | 78 |
| Substrat S2 ohne Schicht | n.b. | n.b. | n.b. | n.b. | 91,8 | n.a. | n.a. | n.b. | 100 |
| TiAlCN auf S1 | 49,5 | -0,7 | -1,5 | 1,7 | 1,2 | 0,03 | 0,025 | 39 | 64 |
| TiAlC auf S1 | 66,4 | 1,2 | 5,1 | 5,2 | 1,2 | n.b. | n.b. | n.b. | n.b. |
| TiAlN auf S1 | 39,3 | 2,5 | 1,9 | 3,1 | 1,2 | n.b. | n.b. | n.b. | n.b. |
| TiN auf S2 | 55,8 | 7,5 | 9,3 | 11,9 | 91,8 | 0,06 | 0,001 | 4 | 100 |
| AlCrN auf S1 | 75,1 | 0,8 | 5,8 | 5,9 | 1,2 | 0,16 | 0,133 | 43 | 71 |
| SiC auf S1 | 46 | -0,4 | -1,9 | 1,9 | 1,2 | 0,13 | 0,108 | 44 | 70 |
| DLC auf S1 | 46,3 | -0,4 | 1,3 | 1,4 | 1,2 | 0,12 | 0,100 | 42 | 71 |

Die Tabelle 1 zeigt Ausführungsbeispiele verschiedener Verschleißschutzschichten, aufgebracht auf hochtransparente Substrate S1 und S2. Bei dem Substrat S1 handelt es sich um ein transparentes Glaskeramik-Material, wie es unter der Bezeichnung CERAN HIGHTRANS® eco, bei der Fa. Schott AG, Mainz, erhalten werden kann. Hierbei handelt es sich um eine volumengefärbte Glaskeramik mit einem Lichttransmissionsgrad von ca. 1,5 %. Bei dem Substrat S2 handelt es sich um ein Borosilikatglas, wie es unter der Bezeichnung BOROFLOAT® 33 von der Fa. Schott AG, Mainz, erhalten werden kann.

Angegeben sind in der Tabelle 1 das Basismaterial der jeweiligen Verschleißschutzschicht, z.B. TiALCN, sowie das Substrat S1 oder S2, auf welches die jeweilige Verschleißschutzschicht aufgebracht ist. Weiterhin sind wesentliche optische Eigenschaften der jeweiligen Verschleißschutzschicht angegeben, so der entsprechende Farbraum im CIELAB-Farbsystem für die Lichtart D65, der Transmissionsgrad, der Haze-Wert, also das Streuverhalten unter einem Winkel > 2,5°, und die Klarheit ("Clarity"), also das Streuverhalten unter einem Winkel von < 2,5°, der jeweiligen Verschleißschutzschicht gemäß der internationalen Norm ASTM D1003.

Die aufgeführten Verschleißschutzschichten genügen den Bedingungen und Erfordernissen hinsichtlich der Buntheit und des Transmissionsgrades.

Tabelle 2: Farbeinfluss bei unterschiedlicher Beleuchtung

| Probe | Einstellung | Lab | Gemessen gegen | | |
| --- | --- | --- | --- | --- | --- |
| | | | weiß | schwarz | |
| SiC auf KN | D65/10° | L | 48,6 | 48,6 | Industriestandard Tageslicht |
| | | a | -0,4 | -0,5 | |
| | | b | -1,3 | -1,3 | |
| | D50/10° | L | 48,6 | 48,5 | Tageslicht für grafische Industrie |
| | | a | -0,5 | -0,6 | |
| | | b | -1,4 | -1,4 | |
| | D55/10° | L | 48,6 | 48,5 | |
| | | a | -0,5 | -0,6 | |
| | | b | -1,3 | -1,3 | |
| | D75/10 | L | 48,7 | 48,6 | |
| | | a | -0,3 | -0,4 | |
| | | b | -1,3 | -1,3 | |
| | A/10° | L | 48,5 | 48,4 | Glühlampenbeleuchtung |
| | | a | -0,6 | -0,8 | |
| | | b | -1,5 | -1,5 | |
| | C/10° | L | 48,6 | 48,5 | Tageslicht nördliche Hemisphäre |
| | | a | -0,3 | -0,4 | |
| | | b | -1,3 | -1,3 | |
| | F2/10° | L | 48,6 | 48,5 | Bürobeleuchtung Fluoreszenzlampe |
| | | a | -0,2 | -0,3 | |
| | | b | -1,4 | -1,5 | |
| | F7/10° | L | 48,7 | 48,6 | Breitband Fluoreszenzlampe |
| | | a | -0,3 | -0,4 | |
| | | b | -1,2 | -1,3 | |

Die Tabelle 2 zeigt Ausführungsbeispiele, welche den Farbeinfluss auf eine Verschleißschutzschicht auf der Basis von Siliziumcarbid (SiC) auf Kalk-Natronglas bei unterschiedlicher Beleuchtung darstellen.

Das Substrat bzw. das Kalk-Natronglas ist bei der Messung auf der vom Messgerät abgewandten Seite angeordnet. Da die SiC-Verschleißschutzschicht einen sehr niedrigen Transmissionsgrad hat, wirken sich die Eigenschaften des Substrates nicht nennenswert auf das Messergebnis der Schicht aus.

Demnach ist es unerheblich, ob für die Messung der optischen Eigenschaften ein Glas oder eine Glaskeramik als Träger-Substrat verwendet werden. Dies lässt sich zudem damit überprüfen, dass die Messergebnisse gemessen gegen Weißstandard und gegen Schwarzstandard im Rahmen der Messgenauigkeit gleich sind. Bei dieser Probe liegt der C*Wert der Messungen mit Normlichtart A und C, also die Buntheit, bei 0,39. Der Farbunterschied ist also sehr klein. Auch in Bezug auf die anderen angegebenen Lichtarten ergibt sich eine sehr kleine Farbdifferenz bzw. ein sehr kleiner Farbabstand Delta E ($\Delta$E).

Der Farbabstand der SiC-Verschleißschutzschicht zwischen den Normlichtarten A und C, gemessen gegen weiß, beträgt in dem Beispiel $\Delta E_{p,v}$ = 0,37 und ist damit sehr klein, so dass der Farbeinfluss bei diesen beiden unterschiedlichen Beleuchtungen als sehr gering anzusehen ist und die gewünschte Farbneutralität der Verschleißschutzschicht gegeben ist. Allgemein wird ein Farbabstand von $\Delta E_{p,v}$ < 4, bevorzugt $\Delta E_{p,v}$ < 2 und besonders bevorzugt $\Delta E_{p,v}$ E < 1 bereits als farbneutral im Sinne der Erfindung angesehen. Die Figuren 7a und 7b zeigen für die Normlichtarten A und C die jeweiligen Spektralkurven.

Tabelle 3: Farbwiedergabe einer AlCrN-Schicht bei unterschiedlicher Beleuchtung

| Probe | L*a*b* | Lichtart | | | | | |
|---|---|---|---|---|---|---|---|
| | | 10°/**A** | 10°/**C** | 10°/**D50** | 10°/**D65** | 10°/**F2** | 10°/**F7** |
| | L* | 77,80 | 77,39 | 77,45 | 77,34 | 77,48 | 77,21 |
| | a* | 1,85 | 0,52 | 1,26 | 0,69 | 0,42 | 0,33 |
| AlCrN auf S1 | b* | 5,14 | 4,79 | 4,86 | 4,79 | 5,59 | 5,13 |

Tabelle 3 zeigt die Farbwiedergabe einer erfindungsgemäßen Verschleißschutzschicht auf der Basis von AluminiumchromNitrid (AlCrN), aufgebracht auf ein transparentes Glaskeramik-Material als Substrat, wie es unter der Bezeichnung CERAN HIGHTRANS® eco bei der Fa. Schott AG, Mainz, erhalten werden kann, bei unterschiedlicher Beleuchtung, wie z.B. der Normlichtarten A und C, D50, D65, F2 und F7. Diese Beleuchtungsarten bilden die wichtigsten relevanten Beleuchtungssituationen ab, etwa für die Verwendung von Substraten aus Glaskeramik im Küchenbereich.

Die AlCrN-Probe wurde gemessen gegen Schwarzstandard. Die Buntheit der AlCrN-Verschleißschutzschicht liegt bei C* = 1,38.

Der Farbabstand der AlCrN -Verschleißschutzschicht zwischen den Normlichtarten A und C, beträgt in dem Beispiel $\Delta E_{p,v}$ = 1,43 ist damit ebenfalls hinreichend klein, so dass der Farbeinfluss etwa bei diesen beiden unterschiedlichen Beleuchtungen als gering anzusehen ist und die gewünschte Farbneutralität der AlCrN-Verschleißschutzschicht gegeben ist.

| | | D55 / 10° | D65 / 10° | D75 / 10 | A / 10° | C / 10° | F2 / 10° |
|---|---|---|---|---|---|---|---|
| DLC auf S1 | L | 41,66 | 41,66 | 41,67 | 41,72 | 41,65 | 41,94 |
| | a | -0,11 | -0,12 | -0,17 | -0,35 | -0,21 | 0,70 |
| | b | 1,39 | 1,43 | 1,41 | 1,39 | 1,33 | 1,93 |

Tabelle 4: Farbwiedergabe einer DLC-Schicht bei unterschiedlicher Beleuchtung

Tabelle 4 zeigt die Farbwiedergabe einer erfindungsgemäßen DLC-Verschleißschutzschicht, aufgebracht auf ein transparentes Glaskeramik-Material als Substrat, wie es unter der Bezeichnung CERAN HIGHTRANS® eco bei der Fa. Schott AG, Mainz, erhalten werden kann, bei unterschiedlicher Beleuchtung, wie z.B. der Normlichtarten D55, D65, D75, sowie A, C und F2.

Die DLC-Probe wurde gemessen gegen Schwarzstandard. Die Buntheit der DLC-Verschleißschutzschicht liegt bei C* = 0,15.

Der Farbabstand der DLC-Verschleißschutzschicht zwischen den Normlichtarten A und C, beträgt in dem

Beispiel $\Delta E_{p,v}$ = 0,62 ist damit ebenfalls sehr klein, so dass der Farbeinfluss etwa bei diesen beiden unterschiedlichen Beleuchtungen als sehr gering anzusehen ist und die gewünschte Farbneutralität der DLC-Verschleißschutzschicht gegeben ist.

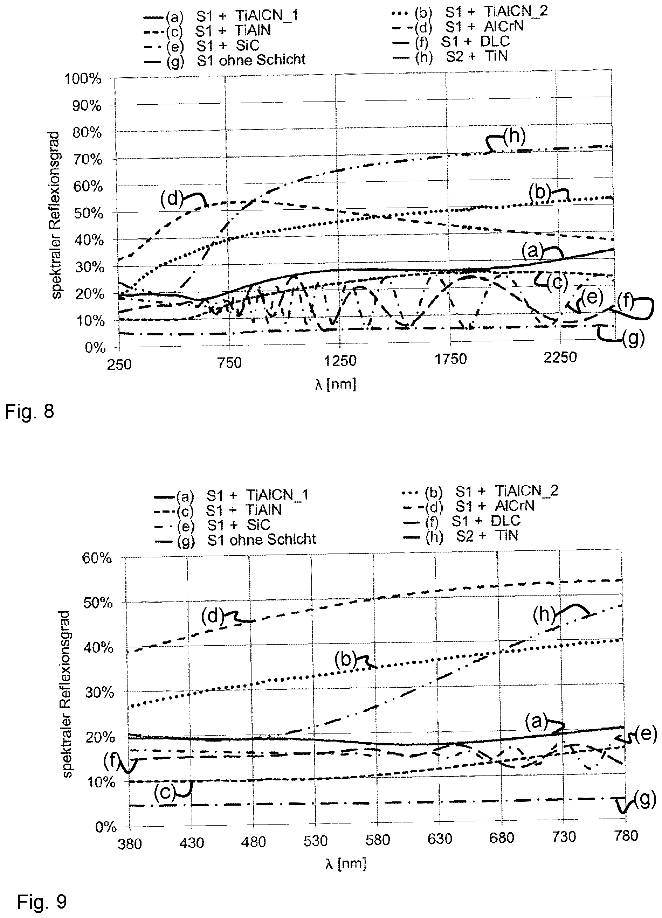

Fig. 8 zeigt Reflexionsspektren verschiedener erfindungsgemäßer Verschleißschutzschichten gemäß der in Tabelle 1 genannten Ausführungsbeispiele über einen Wellenlängenbereich von 250 nm bis etwa 2.500 nm.

Fig. 9 zeigt eine vergrößerte Darstellung der Reflexionsspektren verschiedener Verschleißschutzschichten gemäß Fig. 8, bei der der sichtbare Wellenlängenbereich zwischen 380 nm und 780 nm vergrößert dargestellt ist.

| Bezeichnung | Ohne thermische Belastung | | | | | | | Kratz-schutz | Wider-stand |
|---|---|---|---|---|---|---|---|---|---|
| | D65, 10° | | | | chemische Beständigkeit | | | | |
| | L* | a* | b* | C* | Spülmittel | Zitronen-säure (10%) | Glas-reiniger | | Ω/square |
| S1 + TiAlN | 44,3 | 4,3 | 3,9 | 5,8 | 0 | 0 | 0 | gut | 27 |
| S1 + TiAlCN 2 | 54,6 | 2,3 | -2,0 | 3,0 | 0 | 0 | 0 | sehr gut | 4 |
| S1 + TiAlCN 1 | 51,9 | 1,7 | 0,0 | 1,7 | 0 | 0 | 0 | sehr gut | 30 |

Tabelle 5: Vergleich der Beständigkeit verschiedener Verschleißschutzschichten

Tabelle 5 zeigt die Ergebnisse von Vergleichstests zur Prüfung der Beständigkeit an drei unterschiedlichen erfindungsgemäßen Verschleißschutzschichten, umfassend eine TiAlN- und zwei TiAlCN-Verschleißschutzschichten, welche sich in ihrer Zusammensetzung hinsichtlich der Anteile an Nitrid unterscheiden. Es zeigt sich bei allen getesteten Verschleißschutzschichten eine sehr gute chemische Beständigkeit gegen Angriffe mit Spülmittel, Zitronensäure und Glasreiniger.

Ebenfalls ist die mechanische Beständigkeit der getesteten Verschleißschutzschichten als gut bzw. sehr gut anzusehen.

Die erfindungsgemäße Verschleißschutzschicht 1 oder ein mit der erfindungsgemäßen Verschleißschutzschicht 1 versehenes Substrat 2 kann auf vielen technischen Gebieten verwendet werden, bei denen die Oberfläche einer mechanischen Beanspruchung ausgesetzt ist und/oder bei welchen eine farbneutrale Betrachtung in Reflexion bei allen gängigen Lichtquellen wie Halogen, LED, Energiesparlampe, Tageslicht oder Leuchtstoffröhre notwendig ist und nur eine geringe Transparenz gegeben ist.

Das mit der Verschleißschutzschicht 1 beschichtete Substrat 2 kann damit insbesondere als optisches Bauteil, als Kochfläche, als Heizplatte, als Warmhalteplatte, als Glas- oder Glaskeramikarbeitsplatte, für Glas- oder Glaskeramikbauteile in Haushaltsgeräten, als Ofensichtscheibe, als Kaminsichtscheibe, als Backofensichtscheiben, für Kühlschrank- und Küchenfronten, als Sichtscheiben im Fahrzeugbereich, für Uhrengläsern, für Brillen, etwa VR- oder AR-Brille, oder als Display beispielsweise für Tablet-PCs oder Mobiltelefone, insbesondere auch als Touchdisplay, verwendet werden.

**Patentansprüche**

1. Substrat umfassend oder bestehend aus Glas oder Glaskeramik mit einer temperaturstabilen, harten Verschleißschutzschicht, wobei

die Verschleißschutzschicht ganzflächig oder weitgehend ganzflächig auf zumindest einer Oberfläche des Substrates ausgebildet ist und
eine Buntheit im CIELAB-Farbsystem von C* kleiner 14, bevorzugt kleiner 7 und besonders bevorzugt kleiner 4 aufweist bei Lichteinstrahlung, gemessen in Remission bei Normlichtart A oder Normlichtart C oder bei Schwarzkörperstrahlung mit einer Temperatur zwischen 2.500 K und 10.000 K, und wobei
die Verschleißschutzschicht einen Lichttransmissionsgrad im sichtbaren Wellenlängenspektrum von weniger als 60 %, bevorzugt weniger als 50 % und besonders bevorzugt weniger als 40 % aufweist.

2. Substrat gemäß Anspruch 1, wobei der Lichttransmissionsgrad im sichtbaren Wellenlängenspektrum gleich oder weniger als 35 %, gleich oder weniger als 5 %, gleich oder weniger als 2,5 % oder gleich oder weniger als 1 % aufweist, und/oder wobei der Lichttransmissionsgrad im sichtbaren Wellenlängenspektrum mehr als 0,001 %, bevorzugt mehr als 0,01 % und besonders bevorzugt mehr als 0,1 %, mehr als 0,5 % oder auch mehr als 1 % aufweist.

3. Substrat gemäß einem der vorstehenden Ansprüche, wobei das Substrat transparente oder transluzente, farblose oder volumengefärbte keramisierbare Gläser oder Glaskeramiken, vorzugsweise mit einem thermischen Ausdehnungskoeffizienten $\alpha_{20-300}$ im Bereich +/- $2*10^{-6}$ $K^{-1}$, umfasst.

4. Substrat gemäß einem der vorstehenden Ansprüche, wobei die Verschleißschutzschicht eine Härte, gemessen nach DIN EN ISO 14577 (Martens-Härte) bei einer Prüfkraft von 10 mN von wenigstens 5 GPa, bevorzugt wenigstens 7 GPa, besonders bevorzugt 9 GPa, 11 GPa aufweist.

5. Substrat gemäß einem der vorstehenden Ansprüche, wobei das E-Modul der Verschleißschutzschicht 10 bis 700 GPa, bevorzugt 200 bis 600 GPa, besonders bevorzugt 300 bis 500 GPa beträgt.

6. Substrat gemäß einem der vorstehenden Ansprüche, wobei die Oberfläche der Verschleißschutzschicht chemisch inert gegenüber Luft, Wasser, Reinigungsmitteln wie Essig- und Zitronensäure sowie Substanzen, wie sie bei der Nahrungsmittelzubereitung verwendet werden, insbesondere Salzwasser, und/oder wobei die Oberfläche der Verschleißschutzschicht frei von gesundheitsgefährdenden Stoffen ist, insbesondere frei von Arsen, Antimon, Blei, Quecksilber, Cadmium, sechswertiges Chrom oder Wismuth, sowie Weichmachern (Phthalate) und flüchtigen organischen Komponenten (VOCs).

7. Substrat gemäß einem der vorstehenden Ansprüche, wobei die Verschleißschutzschicht gegenüber Temperaturen von zumindest 350 °C, bevorzugt von zumindest 400 °C und besonders bevorzugt von zumindest 500 °C bei einer Dauer von 30 Minuten über eine Anzahl von wenigstens 100 Zyklen, vorzugsweise von wenigstens 1.000 Zyklen dauerhaft farbstabil ist.

8. Substrat gemäß einem der vorstehenden Ansprüche, wobei die Verschleißschutzschicht mehrlagig ausgebildet ist, umfassend wenigstens zwei, bevorzugt wenigstens drei, besonders bevorzugt mehr als drei Teilschichten, und wobei vorzugsweise zumindest eine Teilschicht, besonders bevorzugt alle Teilschichten, eine Dicke geringer oder gleich 780 nm aufweisen.

9. Substrat gemäß dem vorstehenden Anspruch, wobei die Teilschichten einen Brechungsindex-Gradienten aufweisen.

10. Substrat gemäß einem der beiden vorstehenden Ansprüche, wobei der Brechungsindex der dem Substrat nächstliegenden Teilschicht dem Brechungsindex des Substrates an dessen Oberfläche entspricht oder zumindest um nicht mehr als n = 0,1 von diesem abweicht, und wobei der Brechungsindex zumindest der nachfolgenden Teilschicht zunimmt.

11. Substrat gemäß einem der vorstehenden Ansprüche, wobei die Verschleißschutzschicht amorph oder kristallin ausgebildet ist oder amorph ausgebildet ist und kristalline Anteile umfasst oder kristallin ausgebildet ist und amorphe Anteile umfasst oder sowohl amorphe als auch kristalline Bereiche umfasst, und/oder wobei die Dicke der Verschleißschutzschicht vorzugsweise zwischen 500 nm und 5.000 nm beträgt, bevorzugt wenigstens 800 nm, besonders bevorzugt wenigstens 1.000 nm und bevorzugt weniger als 3.500 nm, besonders bevorzugt weniger als 2.000 nm.

12. Substrat gemäß einem der vorstehenden Ansprüche, wobei die Verschleißschutzschicht eine Titanaluminium - Oxinitrid-Schicht (TiAlON), eine Titanaluminium-Karbonitrid-Schicht (TiAlCN), eine Titanaluminium-Nitrid-Schicht (TiAlN), eine Titanaluminium-Carbid-Schicht (TiAlC), eine Titanaluminium-Oxycarbid-Schicht (TiAlOC), eine Kohlenstoffschicht (DLC-Schicht), eine ta-C-Schicht, eine Siliziumcarbid-Schicht (SiC), eine Aluminiumchromnitrid-Schicht (AlCrN) ist oder umfasst, und/oder wobei die Verschleißschutzschicht wenigstens eines der chemischen Elemente O, N, C, Al, Si, Mg enthält.

**13.** Substrat gemäß einem der vorstehenden Ansprüche, wobei das Substrat zumindest eine weitere Schicht umfasst, welche reine Metalle oder Legierungen umfasst oder gebildet ist aus Nitriden, Oxiden, Carbiden, Oxicarbiden, Carbonitriden und/oder Oxinitriden ausgewählt aus der Gruppe der Elemente Aluminium, Silizium, Bor, Zirkon, Titan, Nickel, Chrom, Magnesium, Molybdän, Zink, Mangan oder Kohlenstoff.

**14.** Substrat gemäß einem der vorstehenden Ansprüche, wobei die Verschleißschutzschicht zumindest einen Bereich umfasst, welcher nicht elektrisch leitfähig bei Raumtemperatur ist, und wobei der Flächenwiderstand wenigstens 1 k$\Omega$/square, bevorzugt wenigstens 0,5 M$\Omega$/square und besonders bevorzugt wenigstens 2 M$\Omega$/square beträgt, und/oder

wobei die Oberfläche der Verschleißschutzschicht, zumindest in Abschnitten, eine Mottenaugenstruktur umfasst.

**15.** Verwendung eines beschichteten Substrates gemäß einem der vorstehenden Ansprüche als optisches Bauteil, als Kochfläche, als Heizplatte, als Warmhalteplatte, als Glas- oder Glaskeramikarbeitsplatte, für Glas- oder Glaskeramikbauteile in Haushaltsgeräten, als Ofensichtscheibe, als Kaminsichtscheibe, als Backofensichtscheiben, für Kühlschrank- und Küchenfronten, als Sichtscheiben im Fahrzeugbereich, für Uhrengläsern, für Brillen, etwa VR- oder AR-Brille, oder als Display beispielsweise für Tablet-PCs oder Mobiltelefone, insbesondere auch als Touchdisplay.

Fig. 1

Fig. 2

Fig. 3

Fig. 4

Fig. 5

1 — {
1a
1b
1c
1d

2

Fig. 6

1 — {
1a
1b
1c
1d
1e
1f

2

CIE Illuminant A

125
100
$S_{(\lambda)}$  75
50
25
0
380    480    580    680    780
λ [nm]

Fig. 7a

CIE Illuminant C

125
100
$S_{(\lambda)}$  75
50
25
0
380    480    580    680    780
λ [nm]

Fig. 7b

—(a) S1 + TiAlCN_1          ··· (b) S1 + TiAlCN_2
---(c) S1 + TiAlN            - -(d) S1 + AlCrN
- ·(e) S1 + SiC              — (f) S1 + DLC
— (g) S1 ohne Schicht       — (h) S2 + TiN

Fig. 8

—(a) S1 + TiAlCN_1          ··· (b) S1 + TiAlCN_2
---(c) S1 + TiAlN            - -(d) S1 + AlCrN
- ·(e) S1 + SiC              — (f) S1 + DLC
— (g) S1 ohne Schicht       — (h) S2 + TiN

Fig. 9

EP 4 011 847 A1

**Europäisches Patentamt**
**European Patent Office**
**Office européen des brevets**

# EUROPÄISCHER RECHERCHENBERICHT

**Nummer der Anmeldung**

**EP 21 21 3479**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2019/389615 A1 (LIN YUPING [US] ET AL) 26. Dezember 2019 (2019-12-26) | 1-8, 10-14 | INV. C03C17/22 |
| A | * Absätze [0037] – [0043] * | 9 | C03C10/00 C03C17/34 |
| X | US 2020/189970 A1 (BOOKBINDER DANA CRAIG [US] ET AL) 18. Juni 2020 (2020-06-18) | 1-8, 10-15 | |
| A | * Absatz [0055]; Ansprüche 1,1,12 * | 9 | |
| X | US 2019/194065 A1 (HENN CHRISTIAN [DE] ET AL) 27. Juni 2019 (2019-06-27) | 1-7, 10-15 | |
| A | * Absätze [0114], [0060] * | 8,9 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| München | 29. April 2022 | Saldamli, Saltuk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# EP 4 011 847 A1

## ANHANG ZUM EUROPÄISCHEN RECHERCHENBERICHT
## ÜBER DIE EUROPÄISCHE PATENTANMELDUNG NR.

EP 21 21 3479

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-2022

| Im Recherchenbericht angeführtes Patentdokument | Datum der Veröffentlichung | Mitglied(er) der Patentfamilie | | Datum der Veröffentlichung |
|---|---|---|---|---|
| US 2019389615 A1 | 26-12-2019 | CN | 109311565 A | 05-02-2019 |
| | | EP | 3452384 A1 | 13-03-2019 |
| | | JP | 2019514803 A | 06-06-2019 |
| | | US | 2019389615 A1 | 26-12-2019 |
| | | WO | 2017192975 A1 | 09-11-2017 |
| US 2020189970 A1 | 18-06-2020 | CN | 111051931 A | 21-04-2020 |
| | | US | 2020189970 A1 | 18-06-2020 |
| | | WO | 2019036702 A1 | 21-02-2019 |
| US 2019194065 A1 | 27-06-2019 | CN | 109956679 A | 02-07-2019 |
| | | DE | 102018110909 A1 | 21-06-2018 |
| | | DE | 202018102536 U1 | 22-05-2018 |
| | | EP | 3502075 A1 | 26-06-2019 |
| | | ES | 2902605 T3 | 29-03-2022 |
| | | JP | 2019112297 A | 11-07-2019 |
| | | KR | 20190076900 A | 02-07-2019 |
| | | PL | 3502075 T3 | 21-02-2022 |
| | | US | 2019194065 A1 | 27-06-2019 |

EPO FORM P0461

Für nähere Einzelheiten zu diesem Anhang : siehe Amtsblatt des Europäischen Patentamts, Nr.12/82

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 112014001619 A1
- DE 102017102642 A1
- DE 102012107129 A1
- DE 102011081234 A1